# EUROPÄISCHE PATENTSCHRIFT

(11) **EP 2 229 585 B1**
(45) Veröffentlichungstag und Bekanntmachung des Hinweises auf die Patenterteilung: **01.05.2013**
(21) Anmeldenummer: 08869562.2
(22) Anmeldetag: 08.12.2008
(51) Int. Cl.: G01N 29/26, G01N 29/06, G01N 29/44, G01N 29/30

(54) **Verfahren für die zerstörungsfreie Prüfung eines Prüflings mittels Ultraschall sowie Vorrichtung hierzu**
Method for the non-destructive testing of a test object by way of ultrasound and apparatus therefor
Procédé pour le contrôle non-destructif d'un échantillon d'essai par ultrasons et dispositif à cette fin

(30) Priorität: 04.01.2008 DE 102008003257; 11.04.2008 DE 102008018648; 07.08.2008 DE 102008037173
(43) Veröffentlichungstag der Anmeldung: 22.09.2010
(73) Patentinhaber: GE Sensing & Inspection Technologies GmbH, 50354 Hürth (DE)
(72) Erfinder: KLEINERT, Wolf-Dietrich, 53125 Bonn (DE); OBERDÖRFER, York, 40764 Langenfeld (DE)
(74) Vertreter: Bauer Vorberg Kayser Patentanwälte
(86) Internationale Anmeldenummer: PCT/EP2008/067044
(87) Internationale Veröffentlichungsnummer: WO 2009/087004

(56) Entgegenhaltungen:
- WO-A-2007/144271
- US-A- 5 511 425
- US-A1- 2006 219 013
- US-A1- 2006 241 456

## Beschreibung

Gegenstand der vorliegenden Erfindung ist ein Verfahren für die zerstörungsfreie Prüfung eines Prüflings mittels Ultraschall, wobei im Rahmen des Verfahrens eine Ersatzreflektorgröße für einen im Volumen des Prüflings befindlichen Fehler aus den Ultraschallechosignalen, die im Rahmen des Verfahrens aufgenommen werden, ermittelt wird. Weiterhin ist Gegenstand der vorliegenden Erfindung eine Vorrichtung, die zur Durchführung des erfindungsgemäßen Verfahrens geeignet ist.

Gattungsgemäße Verfahren sind aus dem Stand der Technik wohl bekannt. Ein mittels eines Impuls-Echo-Verfahrens basierend auf der Einschallung von gepulsten Ultraschall in einen Prüfling aufgefundener Fehler im Volumen des Prüflings, beispielsweise ein Lunker, ein Einschluss oder auch ein Riss, werden charakterisiert durch die Angabe eines Wertes für seine Ersatzreflektorgröße ERG (engl. ERS "equivalent reflector size"). Der Wert dieser Ersatzreflektorgröße wird bestimmt durch einen Vergleich der Amplitude der Echosignale, welche vom untersuchten Fehler im Volumen des Prüflings herrühren, mit einem modellhaften Vergleichsfehler bekannter Größe. In der so genannten Vergleichskörpermethode vergleicht der Prüfer die Echosignale des untersuchten Prüflings mit Echosignalen, die er an einem dem Prüfling äquivalenten Vergleichskörper gewinnt, in den ein oder mehrere Vergleichsreflektoren eingebracht sind. Hierzu können beispielsweise zylindrische Bohrungen mit bekannten Abmessungen in den Vergleichskörper eingebracht werden. Die bei einer Ultraschall-Reflektion an der Bohrung auftretenden Echosignale werden dann mit den Echosignalen, welche bei einer Untersuchung des Prüflings gewonnen werden, verglichen. Bei der Vergleichskörpermethode nimmt der Prüfer daher mit einem geeigneten Prüfkopf, bei dem es sich beispielsweise um einen geeigneten Winkelprüfkopf handeln kann, Messungen sowohl am zu untersuchenden Prüfling als auch am präparierten Vergleichskörper vor.

Bei der sogenannten AVG-Methode (AVG = "Amplitude-Verstärkung-Größe") hingegen wird die Amplitude des von einem Fehler im Volumen des Prüflings resultierenden Echosignals verglichen mit einem theoretisch berechneten und/oder empirisch ermittelten Echosignal eines modellhaften Referenzfehlers, der in der Regel als ebene Kreisscheibe angenommen wird und der sich in der gleichen Tiefe im Prüfling befindet wie der bei der durchgeführten Prüfung des Prüflings aufgefundene Fehler. Hierzu wird für den bei der Prüfung verwendeten Prüfkopf im Vorfeld ein so genanntes AVG-Dlagramm erstellt, welches die Charakteristik des Prüfkopfs beinhaltet. Die im AVG-Diagramm enthaltenen Kurven geben die Echohöhe an, die ein Referenzfehler bei einer Vermessung mit dem verwendeten Prüfkopf erzeugen würde. Bei einer praktischen Prüfaufgabe kann der Prüfer dann die Ersatzreflektorgröße des detektierten Fehlers im Volumen des Prüflings unter Vornahme der Schallschwächungskorrektur (Material-spezifische Schallschwächung) und Transferkorrektur (Prüfling-spezifische Ankoppelverluste) für den Prüfling unmittelbar aus dem AVG-Diagramm ablesen.

Bei einem klassischen Prüfverfahren gemäß der AVG-Methode variiert der Prüfer die Prüfkopfposition und Orientierung relativ zum aufgefundenen Fehler und versucht, hierdurch das resultierende Echosignal zu maximieren. Dieser Vorgang wird bei der Werkstoffprüfung mittels Ultraschall auch als "Züchten" des Ultraschallsignals bezeichnet. Die tatsächliche Bestimmung der Ersatzreflektorgröße des aufgefundenen Fehlers erfolgt dann für das maximierte Ultraschallecho.

Weitere Details zur AVG-Methode ergeben sich beispielsweise aus der Patentschrift US 5,511,425 A, die auf die Rechtsvorgängerin der Anmelderin zurückgeht. Weiterhin wird die AVG-Methode detailliert beschrieben im Buch "Werkstoffprüfung mit Ultraschall", J. Krautkrämer und H. Krautkrämer, 5. Auflage, Springer Verlag, ISBN 3-540-15754-9, Kapitel 19.1, Seiten 343 -349. Die hier offenbarten technischen Details zur AVG-Methode werden durch diese Bezugnahme voll umfänglich zum Offenbarungsgehalt der vorliegenden Anmeldung hinzugefügt.

Aus der US 2006/219013 A1 ist ein Verfahren und eine Vorrichtung zur zerstörungsfreien Untersuchung eines Prüflings mittels Ultraschall bekannt, welches auf der Variation des Einschallwinkels eines von einem Phased-Array-Prüfkopf erzeugten Ultraschallfelds in den Prüfling basiert. Weiterhin wird die Position des Prüfkopfs auf der Oberfläche des Prüflings in kontrollierter Welse verändert. Aus den so an verschiedenen Positionen erhaltenen Sektor-Scans wird ein Ultraschallbild des Prüflings, z.B. ein B-Scan, generiert.

Nachteilig an der AVG-Methode in ihrer gegenwärtig verbreiteten Form ist die Tatsache, dass für eine aussagekräftige Charakterisierung eines Fehlers im Volumen eines Prüflings eine Untersuchung mit einer Mehrzahl von Prüfköpfen durchgeführt werden muss. Dies liegt darin begründet, dass für einen gegebenen Fehler nicht zwangsläufig eine senkrechte Einschallung In den Prüfling eine maximale Echoamplitude liefert. Vielmehr hängt es von der Orientierung des Fehlers im Volumen des Prüflings ab, unter welchem Einschallwinkel ein maximales Echosignal erhalten werden kann. Um tatsächlich einen Wert für die Ersatzreflektorgröße des aufgefundenen Fehlers zu erhalten, der in vernünftiger Weise mit der tatsächlichen Größe des Fehlers korreliert ist, werden daher in der Regel im Rahmen der standardisierten Prüfverfahren basierend auf der AVG-Methode verschiedene Winkelprüfköpfe verwendet, die verschiedene Einschallwinkel realisieren. Dieses Verfahren bedeutet in der Praxis ein hohen Prüfungs- und Dokumentationsaufwand für den Prüfer, so dass in der Regel nur unter wenigen Einschallwinkeln geprüft wird. Darüber hinaus erfordert die Variation des Einschallwinkels einen Wechsel des Prüfkopfs, was zusätzliche Probleme aufgrund der nie hundertprozentig eindeutigen Kalibrierung sowie Ankoppeleigenschaften der Prüfköpfe verursacht.

Aufgabe der vorliegenden Erfindung ist es daher, das aus dem Stand der Technik vorbekannte AVG-Verfahren dergestalt weiterzuentwickeln, dass zumindest vergleichbar aussagekräftige Prüfergebnisse bei deutlich reduziertem Prüfungsaufwand erhalten werden können. Weiterhin ist es Aufgabe der vorliegenden Erfindung, eine Vorrichtung anzugeben, die zur Durchführung des erfindungsgemäßen Verfahrens geeignet ist.

Gelöst wird diese Aufgabe durch ein Verfahren gemäß dem unabhängigen Verfahrensanspruch sowie durch eine Vorrichtung gemäß dem unabhängigen Vorrichtungsanspruch.

Das erfindungsgemäße Verfahren ist für die zerstörungsfreie Prüfung eines Prüflings mittels Ultraschall vorgesehen und weist zumindest die aus Anspruch 1 ersichtlichen Verfahrensschritte auf, die auch zyklisch durchlaufen werden können.

Die erfindungsgemäße Weiterbildung des gattungsgemäßen AVG-Verfahrens basiert also darauf, dass ein Prüfkopf verwendet wird, bei welchem der Einschallwinkel in den Prüfling elektronisch eingestellt werden kann. Hier bietet sich beispielsweise die Verwendung eines sogenannten "Phased-Array-Prüfkopfs" an, d.h. eines Prüfkopfs, der eine Mehrzahl von benachbart angeordneten Ultraschallwandlern aufweist, die unabhängig voneinander phasengenau angesteuert werden können. Aus dem Stand der Technik ist bekannt, dass bei solchen Phased-Array-Prüfköpfen der Abstrahlwinkel α des ausgesandten Schallstrahls durch gezielte Einstellung der Phasenverschiebung zwischen den einzelnen Ultraschallwandlern in weiten Grenzen frei variiert werden kann.

Erfindungsgemäß ist nun vorgesehen, dass bei der Berechnung des ERS-Werts des Fehlers, welcher im Volumen des Prüflings detektiert wurde, aus den Echosignalen, die dem Fehler zugeordnet werden können, der Einfluss der elektronischen Einstellung des Abstrahlwinkels α und damit des Einschallwinkels β auf den ermittelten ERS-Wert des Fehlers automatisch rechnerisch kompensiert wird. Abstrahlwinkel und Einschallwinkel β sind im Rahmen der vorliegenden Erfindung als äquivalent anzusehen, da sie physikalisch fest miteinander verknüpft sind. Insbesondere bedeutet dies, dass im Rahmen des erfindungsgemäßen Verfahrens automatisiert zumindest eine der folgenden Korrekturen vorgenommen wird, bevorzugt aber mehrere:
- Kompensation der Veränderung der virtuellen Ultrallschallwandlergröße bzw. der damit verbundenen Apertur des Ultraschallwandlers bei sich veränderndem Abstrahlwinkel α bzw. Einschallwinkel β,
- Kompensation der Veränderung der Lage des Einkoppelpunkts des vom Ultrallschallwandler ausgestrahlten Ultraschalls in den Prüfling bei sich veränderndem Abstrahlwinkel α bzw. Einschallwinkel β,
- Kompensation der Veränderung des Schallwegs im Vorlaufkörper bei sich veränderndem Abstrahlwinkel α, und
- Kompensation der Lageänderung des Fokus im Prüfling bei sich veränderndem Abstrahlwinkel α bzw. Einschallwinkel β,

Im Rahmen des erfindungsgemäßen Verfahrens wird im Zusammenhang mit der Prüfung eines Prüflings in der Regel eine Messung an einem / mehreren Referenzreflektoren vorgenommen werden. Diese können z.B. in Form von Sacklöchern oder Querbohrungen jeweils mit bekanntem Durchmesser, die in einen Prüfkörper eingebracht sind, vorgenommen werden. Die zur Durchführung des erfindungsgemäßen Verfahrens geeignete Vorrichtung, auf im Folgenden noch genauer eingegangen wird, bietet dabei bevorzugt die Möglichkeit zur Durchführung standardisierter Kalibrationsschritte an, bei denen z.B. auch unter einer Mehrzahl voreingestellter standardisierter Prüfkörper ausgewählt werden kann.

Für die elektronische Einstellung des Einschallwinkels β weisen die bereits erwähnten Phased-Array-Prüfköpfe besondere Vorteile auf. Dies bedeutet aber nicht, dass im Rahmen des erfindungsgemäßen Verfahrens nicht auch andere Ultraschallprüfköpfe mit variablem Einschallwinkel verwendet werden könnten unter der Voraussetzung, dass der Einschallwinkel elektronisch einstellbar und auch quantifizierbar ist.

Zur Berechnung des ERS-Werts des im Volumen des Prüflings detektierten Fehlers aus den Echosignalen werden diese vorteilhaft mit einer Mehrzahl von gespeicherten Referenzwerten verglichen, insbesondere mit einem AVG-Diagramm für den vorgegebenen elektronisch eingestellten Einschallwinkel β. Dabei kann dieses AVG-Diagramm vorteilhaft im Vorfeld prüfkopfspezifisch ermittelt worden sein, z.B. indem eine Mehrzahl von verschiedenen Referenzfehlern unter dem vorgegebenen Einschallwinkel β angeschallt wurden und ein normiertes Referenzechosignal aus den resultierenden Echosignalen erzeugt wurde.

In einer bevorzugten Weiterbildung des erfindungsgemäßen Verfahrens werden die Verfahrensschritte a) bis c) für zumindest zwei verschiedene Einschallwinkel β1 und β2 durchlaufen, die jeweils elektronisch eingestellt werden. Im Zusammenhang mit dieser weitergebildeten Verfahrensführung rührt dann die Mehrzahl der gespeicherten Referenzwerte von einer Mehrzahl von unterschiedlichen Referenzfehlern her, die jeweils unter den zumindest zwei verschiedenen Einschallwinkeln β1 und β2 angeschallt wurden. In der Regel werden die Echosignale des im Volumen des Prüflings aufgefundenen Fehlers mit zwei verschiedenen AVG-Diagrammen Kurvenscharen verglichen werden, die jeweils den Einschallwinkeln β1 beziehungsweise β2 zugeordnet sind.

In einer bevorzugten Weiterbildung des erfindungsgemäßen Verfahrens wird aus den Prüfungsdaten, insbesondere den entlang eines linearen Scans auf der Oberfläche des Prüflings gewonnenen Echosignalen, ein B-Scan (X-Achse: Position auf der Oberfläche des Prüflings, Y-Achse: Tiefe im Prüfling) des Prüflings erzeugt. Hierzu weist die zur Durchführung des erfindungsgemäßen Verfahrens verwendete Vorrichtung einen Wegaufnehmer auf, der die Navigation des Prüfkopfs auf der Oberfläche des Prüflings erfasst. Dabei kann der Wegaufnehmer mechanisch arbeiten, oder auch auf optischen bzw. Ultraschallsignalen basieren, die nach der Methode der "optischen Maus" ausgewertet werden. In der Vorrichtung liegen damit neben den vom Prüfkopf aufgenommenen Ultraschallsignalen auch Informationen zur Position des Prüfkopfs vor. Aus beiden Informationen wird dann ein B-Scan erzeugt, der auf einer geeigneten Anzeigeinheit dargestellt werden oder als Prüfprotokoll ausgedruckt oder elektronisch gespeichert werden kann.

Insbesondere kann im erzeugten B-Scan ein aufgefundener Fehler durch einen Balken symbolisiert werden, dessen Ausdehnung entlang seiner Längsachse mit dem ERS-Wert des aufgefundenen Fehlers korreliert. Vorteilhaft werden dabei für die Darstellung des ERS-Werts und für die X-Position auf der Prüflingsoberfläche dieselben Skalierungen verwendet. Als Balken soll im Zusammenhang der vorliegenden Erfindung eine beliebige geometrische Figur verstanden werden, die spiegelsymmetrisch bezüglich zweier zueinander orthogonaler Achsen ist, beispielsweise eine Linie, ein Rechteck, eine Ellipse etc.. Dabei wird im Zusammenhang mit der vorliegenden Erfindung eine der beiden Symmetrieachsen des Balkens als dessen Längsachse bezeichnet.

Um die Interpretierbarkeit des im Rahmen des erfindungsgemäßen Verfahrens erzeugten B-Scans zu erhöhen, insbesondere die intuitive Erfassbarkeit des erzeugten B-Scans zu verbessern, hat es sich als vorteilhaft herausgestellt, wenn im erzeugten B-Scan auf geeignete Weise zumindest eines der folgenden weiteren Charakteristika des aufgefundenen Fehlers dargestellt wird:
a) die relative Amplitude des Fehlerechos,
b) der Einschallwinkel β, unter dem der ERS-Wert des aufgefundenen Fehlers maximal ist, z.B. indem der Fehler als Balken dargestellt wird, der senkrecht auf der Einschallrichtung ist, unter der sich das maximale Fehlerecho ergibt,
c) die relative Fehlergröße,
d) Informationen über den Schallweg des Echos, z.B. das Bein, aus welchem das Fehlerecho herrührt, und
e) eine Information darüber, ob der ERS-Wert des aufgefundenen Fehlers über alle überprüften Einschallwinkel β im Rahmen vorgebender Fehlergrenzen gleich oder verschieden ist.

Die Angabe von Relativwerten kann sich z.B. auf im Zusammenhang mit der Prüfung des Prüflings vermessene Referenzwerte beziehen.

Hierzu können im B-Scan vorteilhaft einer oder mehrere der folgenden Anzeigeparameter verwendet werden:
a) die Farbe des Balkens ,
b) die Abmessung des Balkens quer zu seiner Längsachse (Balkenbreite B),
c) der Winkel der Längsachse des Balkens gegen die Oberfläche des Prüflings, und
d) die geometrische Grundform des Balkens.

Beispielhaft werden im Folgenden nun einige Darstellungsmöglichkeiten für verschiedene Fehlercharakteristika näher erläutert.

Im Rahmen der vorliegenden Erfindung soll unter relativer Amplitude des Fehlerechos die Information verstanden werden, ob das vom Fehler im Volumen des Prüflings herrührende Ultraschallecho, d.h. die Amplitude des Echos, eine bestimmte vorgegebene Schwelle überschreitet. Eine solche Schwelle kann sich beispielsweise beziehen auf die gemessene Fehlerechoamplitude im Vergleich zur Amplitude eines Referenzfehlers. Insbesondere kann eine Schwelle dann angegeben werden in "Millimeter ERS", z.B. die ERS soll größer oder gleich sein einer Registriergrenze von beispielhaft 2 Millimetern oder 5 Millimetern.

Wird im Rahmen des erfindungsgemäßen Verfahrens der Einschallwinkel β variiert und derjenige Einschallwinkel β bestimmt, unter dem der ERS-Wert des Fehlers maximal ist, so kann dem Prüfer ein Anhaltspunkt für die Orientierung des Fehlers im Volumen des Prüflings gegeben werden, indem die Längsachse des Balkens, welcher den Fehler im B-Scan repräsentiert, gegenüber der Oberfläche des Prüflings geneigt dargestellt wird. Vorteilhaft wird hier der Balken so dargestellt, dass seine Längsachse senkrecht auf der akustischen Achse des unter denjenigen Winkel α eingeschallten Ultraschalls steht, für den der ERS-Wert des Fehlers maximal ist.

Eine weitere für den Prüfer und die Dokumentation relevante Information ist es, ob der ERS-Wert des aufgefundenen Fehlers oberhalb oder unterhalb einer vorgegebenen Registriergrenze liegt. So ist es beispielsweise möglich, im erzeugten B-Scan Fehlersignale unterhalb einer bestimmten Schwelle vollständig zu unterdrücken. Alternativ können solche Fehlersignale auch farbig codiert oder als transparente Balken dargestellt werden, um den Abstand von der Registriergrenze (z.B. in "mm ERS" oder dB) anzugeben. Insbesondere die letzten beiden Darstellungsvarianten bieten den Vorteil, dass der Prüfer darauf hingewiesen werden kann, dass an der untersuchten Stelle zwar ein Fehler im Volumen des Prüflings vorhanden ist, dieser aber bezüglich seines ERS-Werts so klein ist, dass er aufgrund der einschlägigen Prüfvorschriften nicht dokumentiert zu werden braucht.

Weiterhin kann für den Prüfer die Information interessant sein, aus welchem Schallweg, also z.B. "Bein" des eingeschalteten Ultraschallstrahls das Fehlerecho resultiert. Diese Information ist insbesondere bei der Durchführung einer Prüfung an einem Prüfling mit planparallelen Flächen interessant, da hier häufig die Situation auftritt, dass der Fehler erst vom Ultraschallstrahl erfasst wird, nachdem dieser zumindest einmalig an der Rückwand des Prüflings reflektiert wurde. Diese Information lässt sich aus der Laufzeit des Fehlerechos bestimmen und im B-Scan beispielsweise durch farbige Codierung des Balkens grafisch für den Prüfer darstellen.

Weiterhin ist für den Prüfer die Information von Bedeutung, ob der aufgefundene Fehler im Volumen des Prüflings eher als flächenhaft ausgedehnt oder als dreidimensional ausgedehnter Fehler anzusehen ist. Die dreidimensional ausgedehnten Fehler werden in der Regel Lunker oder Fehlstellen sein, die fertigungsbedingt sind und häufig keine Gefahr für Ermüdungsbrüche darstellen. Hingegen sind flächenhaft ausgedehnte Fehler in der Regel mit Rissen im Prüfling korreliert, die Ermüdungserscheinungen sein können und eine starke Tendenz haben sich auszubreiten, was zu Ermüdungsbrüchen führen kann. Ein dreidimensional ausgedehnter Fehler im Volumen des Prüflings ist im Rahmen des erfindungsgemäßen Verfahrens dadurch charakterisiert, dass der resultierende ERS-Wert des Fehlers im Wesentlichen unabhängig vom Einschallwinkel ist. Hingegen zeigen zweidimensional ausgedehnte Fehler eine starke Abhängigkeit vom Einschallwinkel. Hier kann also in den dargestellten Balken die Information codiert werden, ob es sich eher um einen flächenhaft ausgedehnten oder um einen dreidimensionalen Fehler handelt. Dies kann beispielsweise durch Anpassung von Länge und Breite des dargestellten Balkens geschehen oder auch durch die Auswahl einer geometrischen Form, die die Symmetrie des Fehlers repräsentiert. Aber auch eine farbige Codierung kann an dieser Stelle vorteilhaft verwendet werden.

Alternativ kann auch die Erzeugung eines C-Scans (X-Achse: Position in x-Richtung auf der Oberfläche des Prüflings, Y-Achse: Position in Y-Richtung auf der Oberfläche des Prüflings) oder die Erzeugung eines Sector-Scans (auch S-Scan, X-Achse: Entfernung vom Einschallort / Tiefe im Prüfling, Y-Achse: Azimuthalwinkel: Einschallwinkel) vorgesehen werden und in speziellen Anwendungsfällen vorteilhaft sein. Alle vorstehenden Ausführungen zur Darstellung der ermittelten Fehlercharakteristika im B-Scan lassen sich unmittelbar auf die weiterhin vorgesehenen C- und S-Scans übertragen.

Das erfindungsgemäße Verfahren erlaubt es, das in vielen Prüfvorschriften vorgeschriebene AVG-Verfahren nunmehr mit modernen Ultraschallprüfköpfen auszuführen, die eine elektronische Einstellung des Einschallwinkels in den Prüfling erlauben, beispielsweise unter Verwendung der Phased-Array-Technik.

Selbstverständlich ist es ohne weiteres möglich, zur Erhöhung der Prüfgenauigkeit die Zahl der Einschallwinkel β, unter denen die Ersatzreflektorgröße ERS eines Fehlers bestimmt wird, praktisch beliebig zu erhöhen. Insbesondere erlaubt die Verwendung von Phased-Array-Prüfköpfen ein kontinuierliches Durchstimmen des Einschallwinkels β. Praktisch wird die Zahl der verschiedenen Einschallwinkel β , die im Rahmen einer Prüfaufgabe eingestellt werden können, im Wesentlichen durch den Aufwand zur z.B. Ermittlung von AVG-Diagrammen beschränkt.

Eine erfindungsgemäße Vorrichtung für die zerstörungsfreie Prüfung eines Prüflings mittels Ultraschall umfasst einen Sendeprüfkopf mit einem Ultraschallsender, der dazu eingerichtet ist, gerichtete Ultraschallpulse unter einem Einschallwinkel β in den Prüfling einzuschallen. Weiterhin umfasst die Vorrichtung einen Ultraschallempfänger, der dazu eingerichtet ist, Echosignale der in den Prüfling eingeschallten Ultraschallpulse aufzunehmen. Weiterhin umfasst die Vorrichtung eine Ansteuer- und Auswerteeinheit, die dazu eingerichtet ist, den Ultraschallsender des Sendeprüfkopfs so anzusteuern, dass der Ultraschallsender zur Aussendung einer Folge von Ultraschallpulsen angeregt wird. Weiterhin ist sie dazu eingerichtet, die vom Ultraschallempfänger aufgenommenen Echosignale zu verarbeiten. Schließlich ist sie dazu eingerichtet, aus aufgenommenen Echosignalen, die einem Fehler im Volumen des Prüflings zugeordnet werden können, einen ERS-Wert des Fehlers zu bestimmen. Erfindungsgemäß umfasst nun der Ultraschallsender eine Mehrzahl von unabhängig ansteuerbaren Ultraschallwandlern, d.h. er ist vom Phased-Array-Typ. Entsprechend ist die Ansteuer- und Auswerteeinheit dazu eingerichtet, die Mehrzahl von Ultraschallwandlern des Ultraschallsenders individuell phasengenau so anzusteuern, dass der Abstrahlwinkel α des Ultraschallsenders gezielt elektronisch verstellt werden kann. Als Folge der Variation des Abstrahlwinkels α kann damit auch der Einschallwinkel β des Ultraschalls in den Prüfling elektronisch verstellt werden.

Schließlich ist die Ansteuer- und Auswerteeinheit dazu eingerichtet, den Einfluss der elektronischen Verstellung des Einschallwinkels β auf den zu ermittelnden ERS-Wert des Fehlers automatisch zu kompensieren.

Wie im Zusammenhang mit dem erfindungsgemäßen Verfahren bereits erläutert wurde kann der ERS-Wert eines Fehlers beispielsweise automatisiert durch Vergleich mit einer Mehrzahl von gespeicherten Referenzwerten bestimmt werden, wobei es sich bei diesen Referenzwerten beispielsweise um ein oder mehrere AVG-Diagramme handeln kann. In diesem Zusammenhang wird darauf hingewiesen, dass für die Bestimmung eines ERS-Werts eines aufgefundenen Fehlers mittels des erfindungsgemäßen Verfahrens für jeden Winkel, unter dem der Fehler angeschallt wird, neben einem AVG-Diagramm auch ein Referenzecho z.B. aus einem Prüfkörper zur Verfügung stehen muss.

In einer bevorzugten Weiterbildung der erfindungsgemäßen Vorrichtung ist die Ansteuer- und Auswerteeinheit daher dazu eingerichtet, zumindest zwei verschiedene Einschallwinkel β elektronisch einzustellen. In diesem Fall sind die in der Ansteuer- und Auswerteeinheit gespeicherten Referenzwerte mit den zumindest zwei verschiedenen Einschallwinkeln β korreliert. Insbesondere kann es sich um zwei prüfkopfspezifische AVG-Diagramme bzw. -Kurvenscharen für die elektronisch eingestellten zwei verschiedenen Einschallwinkel β handeln.

In einer besonders bevorzugten Ausgestaltung ist in der Ansteuer- und Auswerteeinheit eine Vielzahl von Referenzwerten gespeichert, beispielsweise in Form von AVG-Diagrammen, die gruppenweise mit verschiedenen Einschallwinkeln β korreliert sind. Dabei können diese Referenzwerte weiterhin prüfkopfspezifisch sein. Insbesondere kann es sich also um eine prüfkopfspezifische Menge von AVG-Diagrammen zu verschiedenen Einschallwinkeln β handeln. Bevorzugt ist der Prüfkopf weiterhin mit einer elektronischen Kennung versehen, die es der Ansteuereinheit erlaubt, bei Anschluss des Prüfkopfs selbständig den Prüfkopftyp oder sogar den individuellen Prüfkopf zu erkennen und die gespeicherten Prüfkopf (typ) spezifischen Referenzwerte auszuwählen.

In allen Ausgestaltungen setzt aber die Bestimmung eines (Einschallwinkelspezifischen) ERS-Werts für einen aufgefundenen Fehler i.d.R. voraus, dass ein Referenzwert vorliegt, der z.B. an einem Prüfkörper unter dem jeweiligen Winkel erfasst wurde, oder aber aus einer Interpolation zwischen verschiedenen vermessenen Winkeln herrührt.

In einer besonders bevorzugten Ausgestaltung der erfindungsgemäßen Vorrichtung ist deren Ansteuer- und Auswerteeinheit dazu eingerichtet, automatisiert vom Abstrahlwinkel α des Ultraschallsenders auf den im Prüfling resultierenden Einschallwinkel β umzurechnen, um den Einfluss der elektronischen Einstellung des Einschallwinkels β auf den zu ermittelnden ERS-Wert des Fehlers automatisiert zu kompensieren. Insbesondere kann diese Kompensation prüfkopfspezifisch ausgestaltet sein. Darüber hinaus wird sie praktisch dazu eingerichtet sein, die ultraschallspezifischen Eigenschaften des Materials der Vorlaufstrecke und des Prüflings wie beispielsweise die Schallgeschwindigkeit zu berücksichtigen.

Eine weitere Verbesserung kann erzielt werden, wenn zur automatischen Kompensation des Einflusses der elektronischen Einstellung des Einschallwinkels β auf den zu ermittelnden ERS-Wert des Fehlers die Ansteuer- und Auswerteeinheit der erfindungsgemäßen Vorrichtung dazu eingerichtet ist, automatisiert die mit der elektronischen Variation des Einschallwinkels β einhergehende Variation der virtuellen Ultraschallsendergröße und damit der Apertur des Prüfkopfs zu kompensieren. Die virtuelle Ultraschallsendergröße ergibt sich aus einer Projektion der tatsächlichen geometrischen Abmessung des Ultraschallsenders auf eine senkrecht zur elektronisch eingestellten Abstrahlrichtung des Ultraschallsenders. Strahlt der Ultraschallsender unter einem von 0° verschiedenen Abstrahlwinkel α ab, so hat dies unmittelbar eine Abnahme der virtuellen Ultraschallsendergröße zur Folge. Da die Ultraschallsendergröße ggf. in die Berechnung des ERS-Wertes eines detektierten Fehlers einbezogen wird, muss hier ggf. eine entsprechende automatische Kompensation erfolgen.

Eine weitere Verbesserung ergibt sich, wenn die Ansteuer- und Auswerteeinheit dazu eingerichtet ist, den Einfluss der Verschiebung des Einkoppelorts X₀, die mit einer Verstellung des Abstrahlwinkels α bzw. Des Einschallwinkels β einhergeht, auf den zu ermittelnden ERS-Wert des Fehlers automatisch zu kompensieren.

Schließlich kann noch eine automatische Kompensation der Lageänderung des Fokus im Prüfling, die sich bei einer Variation des Abstrahlwinkels α wegen der daraus resultierenden Veränderung der Schallweglänge im Vorlaufkörper ergibt, vorgesehen werden.

Abschließend sei darauf hingewiesen, dass die erfindungsgemäß automatische Kompensation des Einflusses der elektronischen Verstellung des Einschallwinkels β auf den zu ermittelnden ERS des Fehlers auf Basis von gespeicherten AVG-Diagrammen auf zwei verschiedene Arten vorgenommen werden kann. Einerseits kann die Ansteuer- und Auswerteeinheit dazu eingerichtet sein, die tatsächlichen Messwerte (d.h. zeitaufgelöste Echosignale) unter Berücksichtigung des Einflusses der Verstellung des Einschallwinkels β zu normieren, d.h. z.B. auf die Ergebnisse eines konventionellen Prüfkopfs mit feststehendem Einschallwinkel β umzurechnen. Diese werden dann mit einem standardisierten AVG-Diagramm abgeglichen.

Andererseits können bereits bei der Erstellung der in der Ansteuer- und Auswerteeinheit hinterlegten AVG-Diagramme die prüfkopfspezifischen Einflüsse der elektronischen Winkelverstellung auf die Echosignale berücksichtigt werden, d.h. bereits in den gespeicherten AVG-Diagrammen wird die vorzunehmende Kompensation berücksichtigt. Auch diese Implementierung soll vom erfindungsgemäßen Verfahren sowie der erfindungsgemäßen Vorrichtung umfasst sein.

Schließlich umfasst in einer bevorzugten Weiterbildung der erfindungsgemäßen Vorrichtung diese weiterhin eine Anzeigevorrichtung, die von der Ansteuer- und Auswerteeinheit angesteuert wird. Dabei ist die Ansteuer- und Auswerteeinheit dazu eingerichtet, zumindest einen B-Scan des Prüflings auf der Anzeigeeinrichtung der Vorrichtung darzustellen. Bevorzugt ist auch eine Möglichkeit vorgesehen, einen C-Scan sowie einen Sektorscan (S-Scan) des Prüflings zu erzeugen und z.B. auf der Anzeigeeinheit darzustellen. Bezüglich der Möglichkeiten, das Ergebnis der mittels der erfindungsgemäßen Vorrichtung durchgeführten Prüfverfahren auf der Anzeigeeinrichtung darzustellen, wurde im Zusammenhang mit der Erläuterung des erfindungsgemäßen Verfahrens bereits ausführlich eingegangen. Auf die diesbezüglichen Ausführungen wird hiermit verwiesen.

Auch auf diejenigen weiteren Fehlercharakteristika, die in einem B-Scan vorteilhaft ebenfalls dargestellt werden können sowie auf die Möglichkeiten, diese Charakteristika im B-Scan zu codieren, wurde im Zusammenhang mit der Erläuterung der erfindungsgemäßen Vorrichtung bereits genauer eingegangen.

Weitere Vorteile und Merkmale der erfindungsgemäßen Vorrichtung sowie des erfindungsgemäßen Verfahrens ergeben sich aus den Unteransprüchen sowie aus den Ausführungsbeispielen, die nachfolgend anhand der Zeichnung näher erläutert werden.

In dieser zeigen:
- Fig. 1:: eine schematische Darstellung einer erfindungsgemäßen Vorrichtung für die zerstörungsfreie Prüfung eines Prüflings,
- Fig. 2a-2c:: einen A-Scan des Prüflings, aufgenommen an verschiedenen Einschallpositionen x sowie unter verschiedenen Einschallwinkeln β, sowie den Verlauf der Maximalamplitude Amax für ein gegebenen Einschallwinkel β in Abhängigkeit von der Tiefe d im Prüfling,
- Fig. 3:: eine Darstellung der maximalen Echoamplitude Amax in Abhängigkeit vom Einschallwinkel β,
- Fig. 4:: ein winkelaufgelöstes Prüfkopfspezifisches AVG-Diagramm,
- Fig. 5:: eine schematische Darstellung der Strahlgeometrie am Prüfkopf,
- Fig. 6:: eine einen B-Scan der Probe repräsentierende Darstellung, in der ein Fehler durch einen zugehörigen ERS-Wert repräsentiert wird, und
- Fig. 7:: eine Darstellung entsprechend Figur 6 des Prüflings mit einer Mehrzahl von Fehlern, die verschiedene Reflektionseigenschaften aufweisen.
- Fig. 8:: eine schematische Darstellung eines Verfahrens zur Erfassung der Winkelabhängigkeit des ERS-Werts eines Fehlers im Volumen des Prüflings, und
- Fig. 9a, 9b:: schematische Darstellungen des winkelabhängigen ERS-Werts zweier verschiedener Fehler im Volumen des Prüflings.

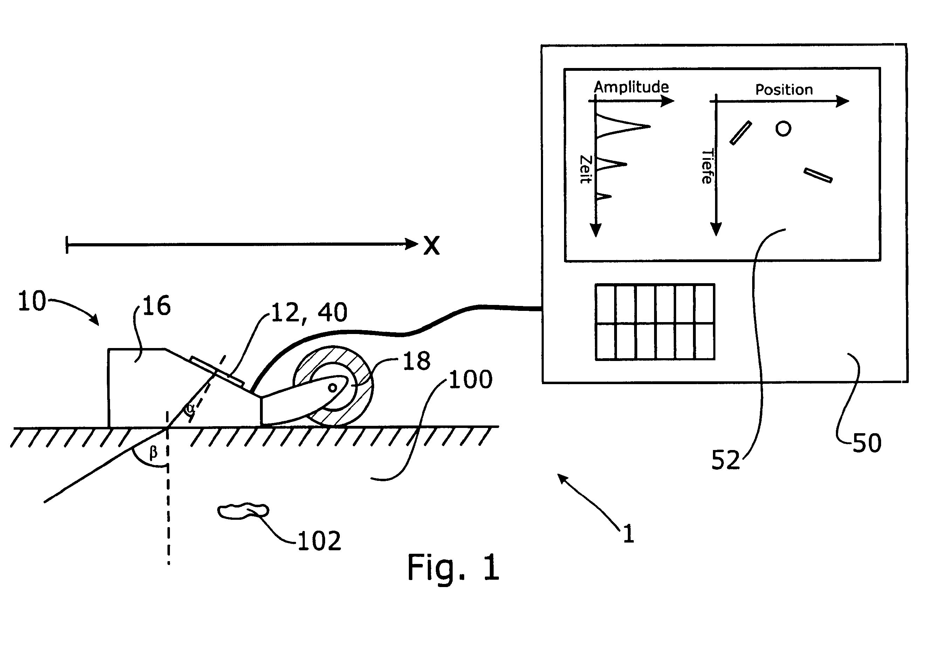

Figur 1 zeigt ein Ausführungsbeispiel einer erfindungsgemäßen Vorrichtung 1 für die zerstörungsfreie Prüfung eines Prüflings 100 mittels Ultraschall. Die Vorrichtung 1 umfasst einen Sendeprüfkopf 10, der seinerseits eine Vorlaufstrecke 16 und einen daran angeordneten Ultraschallsender 12 umfasst. Der Ultraschallsender 12 ist dabei so an der Vorlaufstrecke 16 angeordnet, dass bei einer Anregung des Ultraschallsenders 12 zur Aussendung von Ultraschallpulsen diese im Wesentlichen in die Vorlaufstrecke 16 eingekoppelt werden. Die Vorlaufstrecke 16 kann dabei beispielsweise von einem Körper aus Plexiglas® gebildet werden, wie dies aus dem Stand der Technik grundsätzlich bekannt ist. Bevorzugt sind die Elemente des Sendeprüfkopfs 10 in einem gemeinsamen Gehäuse zusammengefasst, welches in der Figur aus Gründen der Übersichtlichkeit nicht gezeigt ist. Bei dem dargestellten Sendeprüfkopf 10 handelt es sich um einen Winkelprüfkopf, der dazu vorgesehen ist, die vom Ultraschallsender 12 ausgesandten Ultraschallpulse unter einem Einfallswinkel β, der gegen die Flächennormale der Eintrittsfläche des Prüflings 100 gemessen wird, in den Prüfling 100 einzukoppeln. Die Verwendung von Winkelprüfköpfen ist optional und nicht zwingend, je nach Anwendungsfall können auch Prüfköpfe für eine senkrechte Einschallung (d.h. β = 0°) verwendet werden.

Bei dem im Sendeprüfkopf 10 verwendeten Ultraschallsender 12 handelt es sich um einen Ultraschallsender vom Phased-Array-Typ, d.h., der Ultraschallsender 12 umfasst eine Mehrzahl von Ultraschallwandlern 14, die zumindest eine lineare Anordnung ausbilden und individuell ansteuerbar sind. Die Längsachse des zumindest linearen Arrays der Ultraschallwandler 14 ist dabei in der mit X- gekennzeichneten Richtung orientiert. Durch gezielte Einstellung der Phasenlage zwischen den einzelnen Ultraschallwandlern 14 ist es möglich, den Abstrahlwinkel α, d.h. die Strahlrichtung, in weiten Grenzen dynamisch zu beeinflussen.

Der Sendeprüfkopf 10 umfasst im gezeigten Ausführungsbeispiel einen mechanischen Wegaufnehmer 18, der die Bewegung des Sendeprüfkopfs 10 auf der Oberfläche des Prüflings 100 mechanisch abtastet und eine entsprechende Positionsinformation zur Verfügung stellt, z.B. an eine mit dem Sendeprüfkopf 10 verbundene Ansteuereinheit 50. Alternativ kann der Wegaufnehmer 18 auch berührungslos arbeiten, z.B. nach dem Prinzip der optischen Maus. Der Wegaufnehmer 18 ist - unabhängig von seiner Bauart - bevorzugt in der Lage, die Bewegung des Sendeprüfkopfs 10 in zwei voneinander unabhängigen Richtungen auf der Oberfläche des Prüflings 100 zu detektieren. Besondere Vorteile ergeben sich, wenn auch Drehbewegungen des Sendeprüfkopfs 10 auf der Oberfläche des Prüflings detektiert werden können. Auf Basis der Technologie, die in der Patentschrift US 7,324,910 B2 offenbart ist, sowie deren Weiterentwicklung, die in der deutschen Patentanmeldung Az. 10 2007 028 876.1 vom 26. Juni 2007 offenbart ist, kann vollständig auf einen separat ausgebildeten Wegaufnehmer verzichtet werden, da die gesamte Positionsinformation aus den Signalen des Ultraschallsenders 12 selbst gewonnen werden kann.

Mit dem Sendeprüfkopf 10 verbunden ist eine Ansteuereinheit 50, die dazu eingerichtet ist, die im Ultraschallsender 12 des Sendeprüfkopf 10 angeordneten Ultraschallwandler 14 individuell phasengenau anzusteuern. Weiterhin ist die Ansteuereinheit 50 dazu eingerichtet, mit einem Ultraschallempfänger 40 verbunden zu werden, um aus einem Prüfling 10 zurückreflektierte Echosignale zu empfangen, die aus den vom Ultraschallsender 12 eingeschallten Ultraschallpulsen resultieren. Im vorliegend gezeigten Ausführungsbeispiel dient der im Sendeprüfkopf 10 angeordnete Ultraschallsender 12 auch als Ultraschallempfänger 40. Hierzu werden die im Ultraschallsender 12 enthaltenen, separat ausgebildeten und individuell ansteuerbaren Ultraschallwandler 14 nach der Aussendung eines Sendepulses elektrisch zu einem großflächigen Ultraschallsender 12 zusammengeschaltet werden, der dann als Ultraschallempfänger 40 fungiert. Selbstverständlich ist es aber auch möglich, einen separat ausgebildeten Ultraschallempfänger 40 zu verwenden, der z. B. in einem separat ausgebildeten Empfangsprüfkopf angeordnet sein kann. Ein solcher separater Empfangsprüfkopf würde im vorliegenden Ausführungsbeispiel weiterhin ebenfalls eine Vorlaufstrecke umfassen, entsprechend der Vorlaufstrecke 16 des Sendeprüfkopfs 10.

Zur zerstörungsfreien Prüfung eines Prüflings 100 auf beispielsweise im Volumen des Prüflings 100 verborgene Fehler 102 wird der Sendeprüfkopf 10 mit der Steuereinheit 50 verbunden und auf die Oberfläche des Prüflings 100 aufgesetzt. Die akustische Ankopplung des Sendeprüfkopfs 10 an den Prüfling 100 erfolgt in der Regel unter Verwendung eines geeigneten Koppelmittels, bei welches sich beispielsweise um Wasser, Öl oder auch um ein wasserbasiertes Gel handeln kann.

Bei dem Prüfling 100 handelt es sich bevorzugt um ein mechanisches Werkstück oder Werkzeug, es kann sich aber auch um eine biologische Probe handeln.

Nunmehr bewegt der Prüfer den Sendeprüfkopf 10 entlang der in Figur 1 mit X gekennzeichneten Richtung auf der Oberfläche des Prüflings 100 hin und her.

Zugleich beobachtet er die Anzeige auf einer der Ansteuereinheit 50 zugeordneten Anzeigeeinrichtung 52, die im gezeigten Ausführungsbeispiel als Display in die Ansteuereinheit 50 integriert ist. Auf der Anzeigeeinrichtung 52 wird im gezeigten Ausführungsbeispiel ein A-Bild dargestellt, in welchem die Amplitude der zurückreflektierten Ultraschallpulse für den gegebenen Einschallort X als Funktion der Zeit dargestellt ist. Trifft der vom Sendeprüfkopf 10 ausgesandte Schallstrahl auf einen Fehler 102 im Volumen des Prüflings 100, d.h. auf eine ultraschallreflektierende Struktur wie eine Fehlstelle, einen Lunker oder einen Riss, so wird ein Teil des eingeschallten Schalstrahls zurückreflektiert und gelangt auf demselben Wege zum Ultraschallsender 12 des Sendeprüfkopfs zurück. Wie erwähnt fungiert dieser zugleich als Ultraschallempfänger 40, der das zurückreflektierte Schallsignal in ein elektrisches Signal umwandelt, welches dann ggf. auf geeignete Weise verstärkt und an die Ansteuereinheit 50 ausgegeben wird. In der Ansteuereinheit 50 wird das empfangene Echosignal, welches in der Regel als elektrisches Signal vorliegt, vom Sendeprüfkopf 10 ggf. aber z. B. auch in Form eines optischen Signals übermittelt werden kann, auf geeignete Weise aufbereitet, dies kann beispielsweise durch hoch zeitaufgelöste AD-Wandlung und Signalaufbereitung geschehen. Nachfolgend wird das Signal in Form des vorstehend beschriebenen A-Scans auf der Anzeigeeinrichtung 52 dargestellt. Trifft der eingeschallte Ultraschallstrahl auf einen Fehler 102, so ergeben sich hieraus Echosignale, die im A-Scan unmittelbar sichtbar sind. Die vorbeschriebene Verfahrensweise erfolgt dabei vorteilhaft bei festgehaltenem Einschallwinkel β.

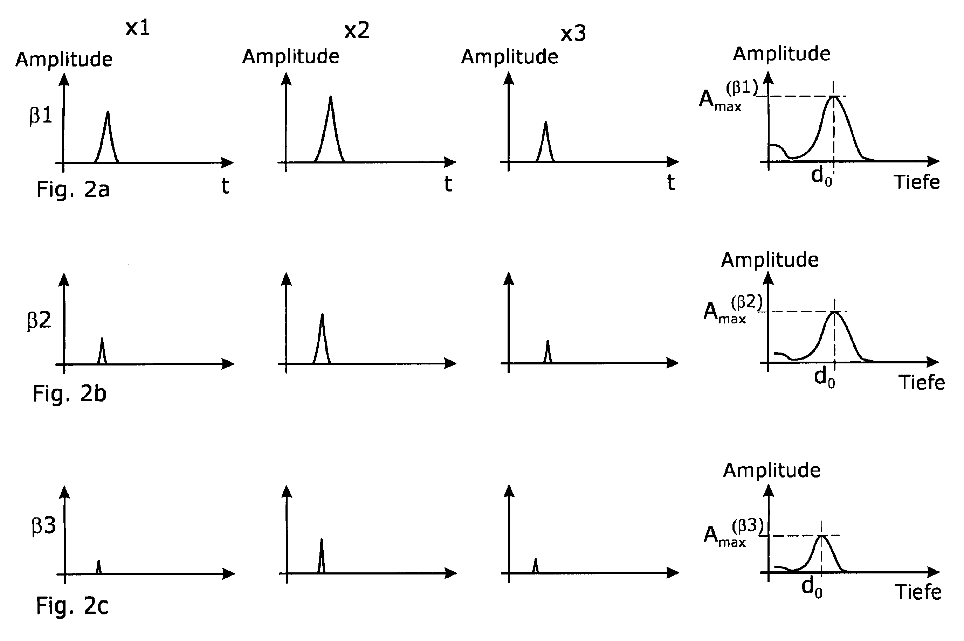

Hat der Prüfer auf die vorbeschriebene Verfahrensweise einen Fehler 102 aufgespürt, so versucht er, durch Variation der X-Position des Sendeprüfkopfs 10 auf der Oberfläche des Prüflings 100, die Amplitude des resultierenden Fehlersignals zu maximieren, d.h. das Signal zu züchten. Auch dieses Züchten des Signals erfolgt für einen festgehaltenen Einschallwinkel β 1. Die sich beim Züchten des Echosignals ergebenden A-Scans an verschiedenen Einschallorten X1, X2 und X3 sind in Figur 2a dargestellt. Deutlich wird, dass aufgrund der Veränderung des Laufwegs im Prüfling 100 das Echosignal zu verschiedenen Zeiten auftritt, darüber hinaus aber auch in seiner maximalen Amplitude variiert. Dies liegt daran, dass beim Verschieben des Sendeprüfkopfs 10 auf der Oberfläche des Prüflings 100 das Zentrum des Schallkegels, in dem der höchste Schalldruck herrscht, über den Fehler 102 geschoben wird. In der Regel ergibt sich die maximale Amplitude im Echosignal, wenn der Schallstrahl den Fehler 102 zentral trifft. Ermittelt man die Einhüllende aller Echosignale für einen festgehaltenen Einschallwinkel β 1 bei einer Variation des Einschallorts X, so erhält man eine Darstellung der Echoamplitude als Funktion der Laufzeit bzw. der Tiefe des Fehlers 102 im Prüfling 100, wie dies im rechten Diagramm der Figur 2a anschaulich dargestellt ist. Aus diesem Diagramm lässt sich die maximale Echoamplitude Amax (β1) bestimmen, die sich für den gewählten Einschallwinkel β 1 ergibt.

Danach kann der Prüfer den Einschallwinkel β variieren, so dass er dieselbe Untersuchung für einen veränderten Einschallwinkel β 2 nochmals durchführt. Alternativ ist auch eine automatische Winkeländerung im Rahmen eines teilautomatisierten Prüfungsverfahrens möglich. Auch hieraus ergibt sich ein Diagramm für den Verlauf der Amplitude als Funktion der Zeit bzw. der Tiefe des Fehlers 102 im Prüfling 100. Ein solches Diagramm ist in Figur 2b rechts dargestellt. Die sich hier ergebende maximale Echoamplitude beim Einschallwinkel β 2 muss nicht zwingend der Echoamplitude beim erstgewählten Einschallwinkel β 1 entsprechen, in der Regel wird hier sogar eine Abweichung vorliegen, sofern es sich nicht um einen regelmäßig geformten Fehler handelt.

Kompensiert man die unterschiedlichen Laufzeiten, die sich durch die unterschiedlichen Einschallwinkel β 1 und β 2 ergeben, so liegen die Peaks in der erwähnten Darstellung der Einhüllenden Amax (β) im Wesentlichen an derselben Stelle D₀. Verzichtet man jedoch auf eine solche Laufzeitkompensation, so kommen die Peaks an verschiedenen Stellen zu liegen.

Exemplarisch ist in Figur 2c das Ergebnis desselben Verfahrens für einen nochmals veränderten Einschallwinkel β 3 dargestellt.

Der Einschallwinkel β wird bei der vorstehend beschriebenen Vorgehensweise unter Ausnutzung der vorteilhaften Sendeeigenschaften eines Ultraschallsenders 12 vom Phased-Array-Typ elektronisch durchgestimmt.

In einer alternativen Ausgestaltung ist die Ansteuereinheit 50 dazu eingerichtet, für einen gegebenen Einschallort X ein sich ggf. ergebendes Echosignal automatisch zu optimieren durch Variation des Einschallwinkels β.

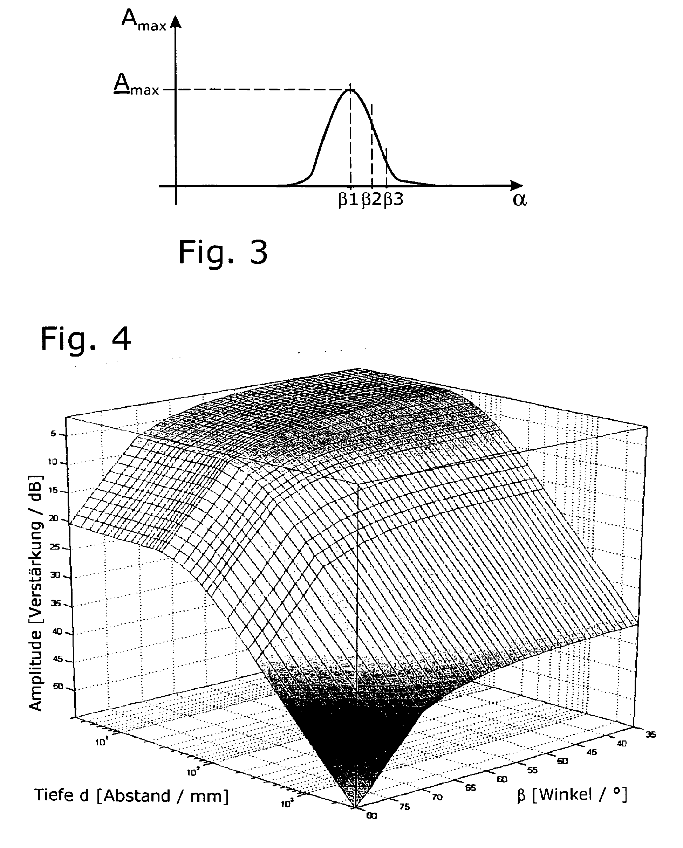

Trägt man um die sich für verschiedene Einschallwinkel β ergebenden Maximalamplituden Amax über den korrespondierenden Einschallwinkel β auf, so erhält man ein Diagramm wie aus Fig. 3 ersichtlich ist. Aus diesem Diagramm bzw. den zugrunde liegenden Echodaten kann nun derjenige Einschallwinkel β bestimmt werden, für den der untersuchte Fehler 102 die maximale Echoamplitude Amax zeigt. Auch kann hieraus auf einfache Weise die Winkelabhängigkeit der Ultraschallreflektivität des Fehlers 102 veranschaulicht und analysiert werden. Auf mögliche Interpretationen des erzielten Verhaltens bezüglich der Art des Fehlers 102 wurde vorstehend bereits eingegangen.

Im Vorfeld der vorstehend erläuterten praktischen Prüfung des Prüflings werden - wie aus dem Stand der Technik für Prüfköpfe mit feststehendem Einschallwinkel β bekannt - sogenannte AVG-Diagramme ermittelt. Dabei zeigt ein AVG-Diagramm die Echoamplitude von Kreisscheibenreflektoren verschiedener Durchmesser und auch eines ausgedehnten ebenen Reflektors (Rückwandecho) als Funktion des Abstands, d.h. als Funktion der Tiefe d im Prüfling. Im Gegensatz zu den aus dem Stand der Technik vorbekannten AVG-Diagrammen und Vorrichtungen für die Ultraschallmessung, in denen prüfkopfspezifische AVG-Diagramme beispielsweise in digitaler Form hinterlegt sind, werden im Rahmen der vorliegenden Erfindung die AVG-Diagramme zusätzlich winkelaufgelöst aufgenommen bzw. generiert und ggf. in der Ansteuereinheit 50 hinterlegt. Beispielhaft zeigt Figur 4 ein solches AVG-Diagramm für einen vorgegebenen Durchmesser eines Kreisscheibenreflektors als Funktion des Abstands d und als Funktion des Winkels β.

Zur Bestimmung des ERS-Werts eines Fehlers mit Hilfe eines Phased-Array-Prüfkopfs, welcher eine elektronische Variation des Einschallwinkels β in den Prüfling 100 erlaubt, kann eine Anpassung des aus dem Stand der Technik bekannten allgemeinen AVG-Diagramms (vgl. US 5,511,425 A), welches auf theoretischen Überlegungen basiert, in verschiedener Hinsicht erforderlich sein. Einerseits ist eine Kalibration des i. A. Prüfkopf-spezifischen AVG-Diagramms erforderlich, um die Ultraschalleigenschaften des Materials des Prüflings zu berücksichtigen und Prüfkopfspezifische Effekte wie eine Alterung der Ultraschallwandler oder eine veränderte Ankopplung des Sendeprüfkopfs an den Prüfling zu kompensieren. Hierzu wird vor der Durchführung einer eigentlichen Prüfung eines Prüflings 100 in den meisten Prüfvorschriften die Durchführung eines Kalibrationsschrittes verlangt, um das allgemeine AVG-Diagramm, welches bereits in der Vorrichtung 1 hinterlegt sein kann, zu kalibrieren.

Darüber hinaus ist bei einer elektronischen Variation des Einschallwinkels β mit Hilfe eines Phased-Array-Prüfkopfs zu berücksichtigen, dass sich die Ultraschalleigenschaften des Prüfkopfs durch die Winkeländerung selbst unmittelbar verändern. Aus diesem Grunde muss das allgemeine AVG-Diagramm, welches für einen bestimmten Einschallwinkel bestimmt wurde, auf andere (elektronische eingestellte) Einschallwinkel β umgerechnet werden. Insbesondere ist es möglich, diese Umrechnung in der Vorrichtung selbst vorzunehmen, so dass eine Hinterlegung einer Vielzahl von Prüfkopf-spezifischen AVG-Diagrammen für verschiedene Einschallwinkel β nicht erforderlich ist. In einem alternativen Ansatz ist es selbstverständlich auch möglich, in der Vorrichtung 1 eine Vielzahl von z. B. Prüfkopf-spezifischen zu hinterlegen, die sich auf eine Mehrzahl von Einschallwinkeln β beziehen. Auch hier können die AVG-Diagramme empirisch ermittelt oder theoretisch berechnet sein.

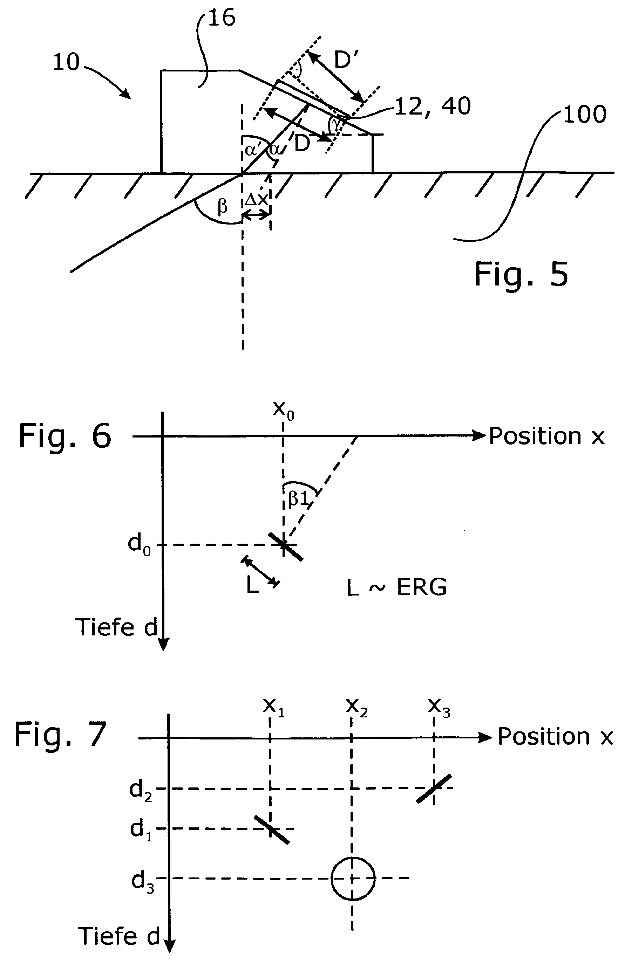

Wie vorstehend bereits erläutert wurde, kann bei Verwendung einer erfindungsgemäßen Vorrichtung der Einschallwinkel β elektronisch durchgestimmt werden. Wie aus Figur 5 ersichtlich ist, ändert sich beispielsweise bei einem Winkelprüfkopf mit einer Vorlaufstrecke bei einem elektronischen Durchstimmen des Einschallwinkels β sowohl der Einkoppelpunkt des Schallstrahls in den Prüfling um ΔX als auch der Durchmesser des Schallstrahls bei seinem Übertritt von der Vorlaufstrecke in den Prüfling. Dies kann auch als eine virtuelle Veränderung der Abmessungen des Ultraschallsenders 12 interpretiert werden (D → D'), die ebenfalls bei der Aufnahme der vorstehend erwähnten AVG-Diagramme berücksichtigt werden muss. Mittels einfacher geometrischer Überlegungen sowie dem akustischen Brechungsgesetz ist es auf einfache Weise möglich, den Einfluss der elektronischen Veränderung des Einschallwinkels β auf die Veränderung des Einkoppelpunkts und die Größe des virtuellen Ultraschallsenders (12) zu berechnen.

Um nun eine Ersatzreflektorgröße ERS für den im Volumen des Prüflings aufgefundenen Fehler zu bestimmen, lässt sich der Prüfer - wie bei den aus dem Stand der Technik vorbekannten Vorrichtungen mit Prüfköpfen mit feststehendem Einschallwinkel β - diejenige AVG-Kurve auf der Anzeigeeinrichtung 52 der Ansteuereinheit 50 darstellen, die dem elektronisch eingestellten Einschallwinkel β entspricht, bei dem sich das maximale Echosignal Amax ergeben hat. Die AVG-Kurve wurde dabei im Vorfeld der eigentlichen Messung an Referenzfehlern geeicht, die z.B. in Prüfkörper eingebracht sein können. Bei der "Eichung" handelt es sich um eine Kalibrierung der Empfindlichkeit des verwendeten Prüfkopfes. In aller Regel wird das dazu benötigte Referenzecho aus Rückwandechos an den standardisierten sog. "K1-" oder "K2-"Prüfkörpern gewonnen (je nach Frequenz des verwendeten Prüfkopfes). Da es sich in diesen Fällen nicht um ebene Rückwände handelt, muss noch eine (i.d.R. vom Hersteller des Prüfkopfes angegebene) Kreisbogenkorrektur durchgeführt werden. Referenzreflektoren aus dem Bauteil sind hingegen eher selten.

Die auf dem Bildschirm angezeigte AVG-Kurve entspricht einer vorgegeben Ersatzreflektorgröße, die in der Regel der von der Prüfspezifikation vorgegebenen Registriergrenze entspricht. Wird ein Fehler gefunden, dessen Echo die auf dem Bildschirm dargestellte AVG-Kurve überschreitet, wird z.B. automatisch von der Ansteuereinheit 50 (entweder in dB über Registriergrenze oder direkt in Millimetern) die sich ergebene Ersatzreflektorgröße ERS angegeben. In der AVG-Kurve kann der Prüfer also unter Abtragung der Laufzeit des Pulses bis zum aufgefundenen Fehler unmittelbar die Ersatzreflektorgröße ERS des Fehlers ablesen. In einer weitgehend automatisierten Prüfungsroutine scannt der Prüfer die Oberfläche des Prüflings 100 auf die vorstehend beschriebene Vorgehensweise ab, bis er Echosignale auffindet, die seiner Ansicht nach auf einen Fehler 102 im Volumen des Prüflings 100 zurückgehen. Ggf. nimmt er hier manuell eine gewisse Optimierung des Fehlersignals vor, bevor er die Ansteuer- und Auswerteeinheit 50 der erfindungsgemäßen Vorrichtung 1 auf einen automatischen Vermessungsmodus umstellt. In diesem steuert die Ansteuereinheit 50 den Ultraschallsender 12 so an, dass der Einkoppelpunkt des Schallstrahls in den Prüfling in X-Richtung auf der Oberfläche des Prüflings 100 verschoben wird. Zugleich erfasst die Ansteuereinheit 50 die Amplitude des resultierenden Fehlerechos als Funktion des Einkoppelpunkts und bestimmt die maximale Echoamplitude. Dabei wird der Einschallwinkel β konstant gehalten.

In einem nachfolgenden Verfahrensschritt variiert die Ansteuereinheit 50 den Einschallwinkel, so dass der zu vermessende Fehler 102 im Volumen des Prüflings 100 unter einem anderen Winkel β2 eingeschallt wird. Auch hier variiert die Ansteuereinheit 50 durch geeignete Ansteuerung des Ultraschallsenders 12 den Einkoppelpunkt des ausgesendeten Schallstrahls in den Prüfling, wobei zugleich die sich ergebende Echoamplitude erfasst wird. Auch hier wird die maximale Echoamplitude Amax (β2) beim eingestellten Einschallwinkel β2 ermittelt, d.h. der Prüfer "züchtet" das Echosignal.

Durch Vergleich mit einem oder mehreren prüfkopf- sowie winkelspezifischen AVG-Diagrammen bestimmt dann die Ansteuereinheit 50 der erfindungsgemäßen Vorrichtung automatisch den ERS-Wert des vermessenen Fehlers 102. Hierzu kompensiert die Ansteuereinheit 50 automatisch den Einfluss der elektronischen Variation des Abstrahlwinkels α des Ultraschallsenders 12 auf den Einkoppelpunkt des Ultraschallstrahls in den Prüfling und damit auf die Laufzeit der Ultraschallpulse vom Ultraschallsender 12 bis zum Fehler 102. Weiterhin kompensiert die Ansteuereinheit 50 ebenfalls automatisch den Einfluss der elektronischen Variation des Abstrahlwinkels α des Ultraschallsenders 12 auf die virtuelle Sendergröße, wie vorstehend beschrieben wurde. Auch die Lageänderung des Fokus im Prüfling durch den veränderten Schallweg im Vorlaufkörper kompensiert die Ansteuereinheit 50 automatisch. Schließlich rechnet die Ansteuereinheit 50 automatisiert vom Abstrahlwinkel α auf den Einschallwinkel β um, wobei ggf. auch die Materialeigenschaften des Prüflings berücksichtigt werden.

Im Ergebnis erhält man sowohl aus dem manuell als auch aus dem automatisiert durchgeführten Prüfungsverfahren einen ERS-Wert des im Volumen des Prüflings 100 aufgefundenen Fehlers 102 sowie denjenigen Einschallwinkel β, unter dem sich das maximale Fehlersignal Amax ergibt. Diese Daten können dann protokolliert werden.

Liegen zusätzlich Positionsinformationen zum Prüfkopf vor, so kann das Prüfungsergebnis weiterhin in einem B-Scan, wie er beispielhaft in Figur 6 wiedergegeben ist, oder auch in einem C-Scan bzw. S-Scan auf anschauliche Art und Weise dargestellt werden. So kann ein Balken der Länge L im B-Scan dargestellt werden, dessen X-Position auf der Oberfläche des Prüflings derjenigen Position X₀ entspricht, an der sich rechnerisch der Fehler befindet. In Y-Richtung ist der Balken in der Tiefe D₀ angeordnet, der der rechnerischen Tiefe des Fehlers im Volumen des Prüflings 100 entspricht. Weiterhin ist die Länge L des Balkens, der den vermessenen Fehler 102 darstellt, unmittelbar mit der im Rahmen des erfindungsgemäßen Prüfverfahrens ermittelten Ersatzreflektorgröße ERS des Fehlers verknüpft. Vorteilhaft ist die Orientierung des Balkens darüber hinaus unmittelbar mit demjenigen Einschallwinkel β korreliert, an dem sich das maximale Echosignal Amax ergibt. Hierzu kann die Längsachse des Balkens gegenüber der X-Achse geneigt dargestellt werden, dergestalt, dass der Balken senkrecht zu der Schallausbreitungsrichtung orientiert ist, die demjenigen Einschallwinkel β entspricht, unter dem sich das maximale Echosignal ergibt. Die Orientierung des Balkens im in Figur 6 dargestellten B-Scan gibt dem Prüfer damit unmittelbar eine Information über die Orientierung des vermessenen Fehlers im Prüfling, die ebenfalls protokolliert und gespeichert werden kann. Dabei wird der in Figur 6 schematisch dargestellte B-Scan dem Prüfer bevorzugt ebenfalls auf der Anzeigeeinrichtung 52 dargestellt, die mit der Ansteuereinheit 50 verbunden ist. Bevorzugt ist die Ansteuereinheit 50 dazu eingerichtet, die gespeicherten Daten an einen PC zu übergeben, wo sie einer weiteren Auswertung unterzogen werden können.

Figur 7 zeigt schließlich einen weiteren B-Scan eines Prüflings 100, aus welchem drei Fehler 102 im Volumen des Prüflings 100 ersichtlich sind. Die Fehler liegen dabei an den Positionen X1, X2 sowie X3. Die an den Positionen X1 und X3 aufgefundenen Fehler 102 zeigen dabei eine starke Abhängigkeit der Echosignale vom Einschallwinkel, d.h. die sich bei einer Veränderung des Einschallwinkels β ergebende Variation der maximalen Fehlerechoamplitude Amax übersteigt einen bestimmten Schwellenwert. Hieraus kann geschlossen werden, dass es sich um eher flächenhaft ausgedehnte Fehler 102 handelt, entsprechend werden diese Fehler im B-Scan der Figur 7 als im Wesentlichen eindimensionale Symbole dargestellt.

Der bei der Position X2 aufgefundene Fehler 102 hingegen zeigt eine im Wesentliche vom Einschallwinkel β unabhängige Echoamplitude, d.h. die sich ergebende Variation der Echoamplitude bleibt unter einer vorbestimmten Schwelle. Hieraus kann auf eine eher gleichförmige dreidimensionale Ausdehnung des Fehlers 102 geschlossen werden, die im B-Scan der Figur 7 durch ein zweidimensionales Fehlersymbol (z.B. eine Kreisscheibe wie gezeigt) dargestellt wird, deren Durchmesser mit der Ersatzreflektorgröße ERS dieses Fehlers korreliert ist.

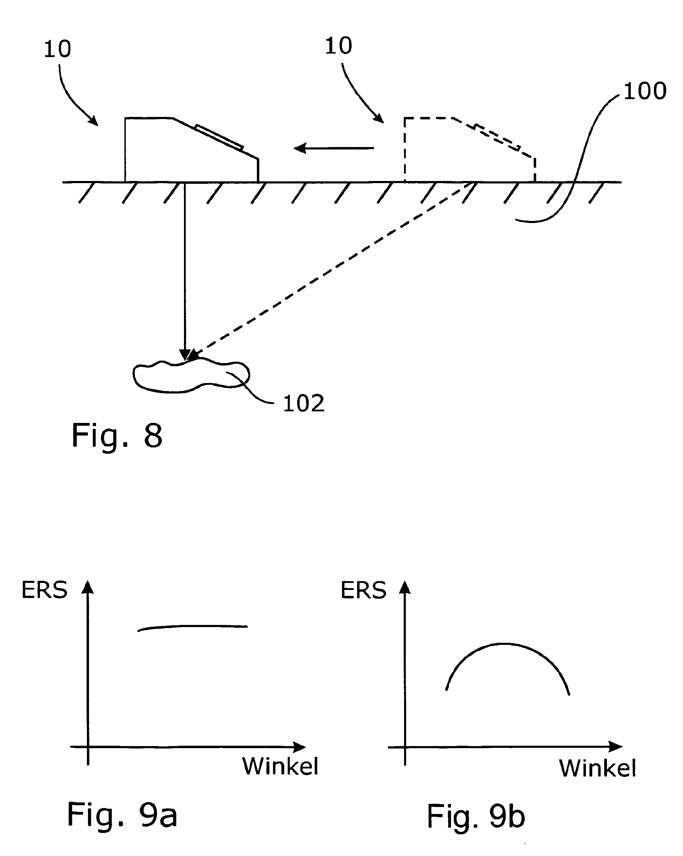

Anhand von Fig. 8 wird nun noch ein neuartiges Verfahren illustriert, welches ebenfalls in der erfindungsgemäßen Vorrichtung 1 implementiert ist. In einem ersten Verfahrensschritt wird der Sendeprüfkopf 10 von der Vorrichtung 1 dergestalt angesteuert, dass er Ultraschallpulse unter einem festen Einfallwinkel β in den Prüfling 100 einschallt. Hat der Prüfer einen Fehler 102 im Volumen des Prüflings 100 aufgefunden, so züchtet er das Fehlersignal, bis die Signalamplitude maximal wird. In einem nächsten Schritt aktiviert der eine "Scan"-Funktion, bei der der Prüfkopf 10 dergestalt von der Vorrichtung 1 angesteuert wird, dass der Einschallwinkel β in den Prüfling 100 elektronisch innerhalb eines vorgebenen Intervalls variiert wird. Die Vorrichtung 100 ist weiterhin dazu eingerichtet, dann aus den unter den verschiedenen Einschallwinkeln β empfangenen Fehlerechos das maximale Fehlerecho und den dazugehörigen Einschallwinkel β Max zu bestimmen. Wird die Position des Sendeprüfkopfs 10 auf der Oberfläche des Prüflings 100 verändert, so ergibt sich ein veränderter Einschallwinkel β, unter welchem das Fehlerecho maximal ist, da ein maximales Fehlerecho i.d.R. dann erhalten wird, wenn der Fehler zentral vom Ultraschallstrahl erfasst wird. Wird wie zuvor beschrieben ein elektronischer Winkel-Scan durchgeführt, so kann die Vorrichtung 1 vollautomatisch denjenigen veränderten Einschallwinkel β auffinden, für den das Fehlerecho maximal wird. Über eine Variation der Position des Sendeprüfkopfs 10 auf der Oberfläche des Prüflings 100 kann mittels des vorstehend beschriebenen Verfahrens automatisiert das maximale Fehlerecho für verschiedene Einschallwinkel β bestimmt werden. Dabei kann die Position des Sendeprüfkopfs 10 auf der Oberfläche des Prüflings 100 einerseits durch eine mechanische Bewegung des Sendeprüfkopfs 10 erfolgen, sie kann aber auch virtuell variiert werden durch Durchführung eines linearen Scans innerhalb der Vielzahl von individuellen Ultraschallwandlern 14 im Ultraschallsender 12 (so genannter "elektronischer linearer Scan").

Ist im Gerät zumindest ein AVG-Diagramm z. B. gemäß Fig. 4 hinterlegt, welches beispielsweise theoretisch berechnet oder mittels praktischer Messungen ermittelt worden sein kann, so kann aus dem Diagramm aus der für einen bestimmten Einschallwinkel β ermittelten maximalen Fehlerechoamplitude der ERS-Wert des Fehlers für diesen Winkel bestimmt werden. Gegebenenfalls kann es erforderlich sein, das/die im Gerät hinterlegte AVG-Diagramm/e Prüfkopf- bzw. Material spezifisch zu kalibrieren anhand eines an einem Prüfkörper gewonnenen Referenzechos, welches ggf. unter verschiedenen Einschallwinkeln aufgenommen wird, bevor die eigentliche Prüfung des Prüflings 100 durchgeführt wird. Die AVG-Methode erlaubt damit insbesondere die automatische Kompensation der sich für die unterschiedlichen Einschallwinkel ergebenden Schallwege im Prüfling.

Alternativ kann die Vorrichtung 1 bei der Bestimmung des winkelabhängigen ERS-Werts eines Fehlers 102 im Volumen des Prüflings 100 auch auf die Positionsinformation zurückgreifen, die von der Wegerfassungseinheit 18 geliefert wird. Wie vorstehend beschrieben wird in einem ersten Schritt für einen festen Einschallwinkel β diejenige Position des Sendeprüfkopfs 10 auf der Oberfläche des Prüflings 100 gesucht, für die die Amplitude des Fehlerechos maximal ist.

Nachfolgend wird vom Prüfer eine "Trace"-Funktion an der Vorrichtung 1 aktiviert. Wird diese aktiviert, ist die Vorrichtung 1 dazu eingerichtet, bei einer sich verändernden Position des Sendeprüfkopfs 10 mittels geeigneter geometrischer Berechnungen denjenigen Einschallwinkel β am Sendeprüfkopf 10 einzustellen, unter welchem der Fehler 102 im Prüfling auch bei der geänderten Sendeprüfkopfposition zentral vom Ultraschallstrahl erfasst wird. Bei einer Verschiebung des Sendeprüfkopfs 10 auf der Oberfläche des Prüflings 100 wird der aufgefundene Fehler 102 dann unter zur Hilfenahme der erwähnten Trace-Function jederzeit zentral vom Ultraschallstrahl erfasst, so dass das sich ergebene Fehlerecho als maximales Fehlerecho für den eingestellten Einschallwinkel β angesehen werden kann. Es kann also unmittelbar durch Variation der Position des Sendeprüfkopfs 10 auf der Oberfläche des Prüflings 100 das maximale Fehlerecho als Funktion des Einschallwinkels β aufgenommen werden und hieraus der winkelabhängige ERS-Wert des Fehlers 102 als Funktion des Winkels β bestimmt werden.

Die Fig. 9a und 9b zeigen schließlich exemplarisch den winkelabhängigen Verlauf des ERS-Werts zweier verschiedener Fehler 102 im Volumen des Prüflings 100. Dabei zeigt Fig. 9a einen Fehler 102, dessen ERS-Wert nur schwach mit dem Einschallwinkel β variiert. Es handelt sich also offenkundig um einen Fehler 102 dessen Ultraschallreflektivität praktisch nicht von demjenigen Winkel abhängt, unter dem der Fehler vom Ultraschallstrahl getroffen wird. Mithin ist davon auszugehen, dass der Fehler zumindest in Bezug auf diejenige Raumrichtung, in der die Position des Sendeprüfkopfs 10 bei der vorstehend genannten Untersuchung variiert wurde, weitgehend isotrop ist.

Fig. 9b hingegen zeigt einen Fehler, dessen ERS-Wert sehr stark vom Einschallwinkel β abhängt. D.h. die Ultraschallreflektivität des Fehlers 102 hängt stark von demjenigen Winkel ab, unter dem der Fehler 102 vom Ultraschallstrahl erfasst wird. Zumindest im Bezug auf diejenige Raumrichtung, in der der Sendeprüfkopf zur Erfassung der Winkelabhängigkeit des ERS-Werts bewegt wurde, ist der zu klassifizierende Fehler 102 als stark anisotrop anzusehen. Es kann sich also beispielsweise um einen Riss handeln, der mit hoher Wahrscheinlichkeit registrierungspflichtig ist, und daher auf geeignete Weise beispielsweise in einem von der Vorrichtung 1 erzeugten B-Scan, C-Scan oder Sektorscan graphisch hervorgehoben sein sollte, wie dies vorstehend bereits erläutert wurde.

## Patentansprüche

1. Verfahren für die zerstörungsfreie Prüfung eines Prüflings (100) mittels Ultraschall, die folgenden Verfahrensschritte umfassend:
a. Einschallen gerichteter Ultraschallpulse in den Prüfling (100) unter einem Einschallwinkel β, wobei der Einschallwinkel β elektronisch eingestellt wird,
b. Aufnehmen von Echosignalen, die aus den in den Prüfling (100) eingeschallten Ultraschallpulses resultieren,
c. Bestimmen eines ERG-Werts (ERG **=** "Ersatzreflektorgröße") eines Fehlers (102) im Volumen des Prüflings aus Echosignalen, die dem Fehler (102) zugeordnet werden können durch Vergleich mit einer Mehrzahl gespeicherter Referenzwerte und mit rechnerischer Kompensation des Einflusses auf den zu ermittelnden ERG-Wert des Fehlers (102) durch die Veränderungen des Einschallwinkels β, wobei die Kompensation wenigstens eine der folgenden Größenänderungen berücksichtigt: Änderung der virtuellen Ultraschallwandlergröße, Änderung der Lage des Einkoppelpunktes , Änderung des Schallwegs oder Änderung des Fokus.

2. Verfahren gemäß Anspruch 1, **dadurch gekennzeichnet, dass**
a. zum Einschallen gerichteter Ultraschallpulse ein Sendeprüfkopf (10) verwendet wird, dessen Ultraschallsender (12) der eine Mehrzahl von unabhängig ansteuerbaren Ultraschallwandlern (14) umfasst, und
b. zum elektronischen Einstellen des Einschallwinkels β die Mehrzahl von Ultraschallwandlern (14) individuell phasengenau angesteuert wird, dergestalt dass der Abstrahlwinkel a des Ultraschallsenders (12) variiert wird.

3. Verfahren gemäß Anspruch 1, **dadurch gekennzeichnet, dass** es sich bei den gespeicherten Referenzwerten um folgendes handelt:
a. ein AVG("Amplitude-Verstärkung-Größe")-Diagramm zum Einschallwinkel β, und/oder
b. Echos von einem oder mehreren unter dem Einschallwinkel β vermessenen Referenzfehlern.

4. Verfahren gemäß Anspruch 1, **dadurch gekennzeichnet, dass** die Verfahrensschritte a) bis c) für zumindest zwei verschiedene Einschallwinkel β1, β2 durchlaufen werden, die elektronisch eingestellt werden.

5. Verfahren gemäß Anspruch 1, **dadurch gekennzeichnet, dass** die Mehrzahl von gespeicherten Referenzwerten mit den zumindest zwei verschiedenen Einschallwinkein β1, β2 korreliert sind.

6. Verfahren gemäß Anspruch 1, **dadurch gekennzeichnet, dass** zur automatischen Kompensation des Einflusses der elektronischen Einstellung des Einschallwinkels β auf den ermittelten ERG-Wert des Fehlers automatisiert vom Abstrahlwinkel α des Ultraschallsenders (12) auf den resultierenden Einschallwinkel β umgerechnet wird.

7. Verfahren gemäß Anspruch 1, **dadurch gekennzeichnet, dass** zur automatischen Kompensation des Einflusses der elektronischen Einstellung des Einschallwinkels β auf den ermittelten ERG-Wert des Fehlers automatisiert die mit der elektronischen Variation des Einschallwinkels β einhergehende Variation der virtuellen Ultraschallsendergröße D' kompensiert wird.

8. Verfahren gemäß Anspruch 1, **dadurch gekennzeichnet, dass** zur automatischen Kompensation des Einflusses der elektronischen Einstellung des Einschallwinkels β auf den ermittelten ERG-Wert des Fehlers automatisiert die mit der elektronischen Variation des Einschallwinkels β einhergehende Variation der Lage des Fokus des Ultraschallstrahls im Prüfling kompensiert wird.

9. Verfahren gemäß Anspruch 1, **dadurch gekennzeichnet, dass** zur automatischen Kompensation des Einflusses der elektronischen Einstellung des Einschallwinkels β auf den ermittelten ERG-Wert (ERG = "Ersatzreflektorgröße") des Fehlers automatisiert die mit der elektronischen Variation des Einschallwinkels β einhergehende Variation der Lage des Einkoppelpunktes X in den Prüfling kompensiert wird.

10. Verfahren gemäß Anspruch 1, **dadurch gekennzeichnet, dass** in einem weiteren Verfahrensschritt ein B-Scan ein C-Scan oder ein S-Scan des Prüflings (100) dargestellt wird.

11. Verfahren gemäß Anspruch 10, **dadurch gekennzeichnet, dass** im dargestellten Scan ein Fehler (102) durch einen Balken symbolisiert wird, dessen Ausdehnung entlang seiner Längsachse mit dem ERG-Wert des Fehlers (102) korreliert.

12. Verfahren gemäß Anspruch 10, **dadurch gekennzeichnet, dass** Im dargestellten Scan zumindest eines der folgenden weiteren Charakteristika eines Fehlers (102) dargestellt wird:
a. relative Amplitude des Fehlerechos,
b. Einschallwinkel β, unter dem der ERG-Wert des Fehlers (102) maximal ist,
c. Relative Fehlergröße,
d. Schallweg, aus welchem das Fehlerecho herrührt, und
e. Information darüber, ob der ERG-Wert des Fehlers (102) über verschiedene Einschallwinkel β im Wesentlichen konstant ist.

13. Verfahren gemäß Anspruch 12, **dadurch gekennzeichnet, dass** zumindest einer der folgenden Anzeigeparameter zur Codierung der dazustellenden weiteren Fehlercharakteristika verwendet wird:
a. Farbe,
b. Abmessung des Balkens quer zu seiner Längsachse,
c. Winkel der Längsachse des Balkens gegen die Oberfläche des Prüflings (100),
d. Geometrische Grundform des Balkens.

14. Vorrichtung, (1) für die zerstörungsfreie Prüfung eines Prüflings (100) mittels Ultraschall, mit
a. einem Sendeprüfkopf (10) mit einem Ultraschallsender (12), der dazu eingerichtet ist, gerichtete Ultraschallpulse unter einem Einschallwinkel β in den Prüfling (100) einzuschallen,
b. einem Ultraschallempfänger (40), der dazu eingerichtet ist, Echosignale der in den Prüfling (100) eingeschallten Ultraschallpulse aufzunehmen,
c. einer Ansteuer- und Auswerteeinheit (50), die dazu eingerichtet ist,
i. den Ultraschallsender (12) des Sendeprüfkopfs (10) so anzusteuern, dass der Ultraschallsender (12) zur Aussendung von Ultraschallpulsen angeregt wird,
ii. die vom Ultraschallempfänger (40) aufgenommenen Echosignale zu verarbeiten, und
iii. aus Echosignalen, die einem Fehler (102) im Volumen des Prüflings (100) zugeordnet werden können, einen ERG-Wert (ERG = "Ersatzreflektorgröße") des Fehlers (102) zu bestimmen,
**dadurch gekennzeichnet, dass**
d. der Ultraschallsender (12) eine Mehrzahl von unabhängig ansteuerbaren Ultraschallwandlern (14) umfasst, und
e. die Ansteuer- und Auswerteeinheit (50) dazu eingerichtet ist:
i. die Mehrzahl von Ultraschallwandlern (14) individuell phasengenau so anzusteuern, dass der Abstrahlwinkel α des Ultraschallsenders (12) und damit der Einschallwinkel β in den Prüfling (100) elektronisch verstellt werden kann, und
ii. den ERG-Wert eines Fehlers (102) automatisiert durch Vergleich mit einer Mehrzagk von gespeicherten Referenzwerten zu bestimmen.
iii. den Einfluss der elektronischen Verstellung des Einschallwinkels β auf den zu ermittelnden ERG-Wert des Fehlers (102) rechnerisch automatisch zu kompensieren, wobei die Kompensation wenigstens eine der folgenden Größenänderungen berücksichtigt: Änderung der virtuellen Ultraschallwandlergröße, Änderung der Lage des Einkoppelpunktes , Änderung des Schallwegs oder Änderung des Fokus.

15. Vorrichtung gemäß Anspruch 14, **dadurch gekennzeichnet, dass** es sich bei den gespeicherten Referenzwerten um folgendes handelt:
a. ein AVG-Diagramm zum Einschallwinkel β, und/oder
b. Echos von einem oder mehreren unter dem Einschallwinkel β vermessenen Referenzfehlern.

16. Vorrichtung (1) gemäß Anspruch 14, **dadurch gekennzeichnet, dass**
c. die Ansteuer- und Auswerteeinheit (50) dazu eingerichtet ist, zumindest zwei verschiedene Einschallwinkel β elektronisch einzustellen, und
d. die Mehrzahl von gespeicherten Referenzwerten mit den zumindest zwei verschiedenen Einschallwinkeln β korreliert ist.

17. Vorrichtung, (1) gemäß Anspruch 14, **dadurch gekennzeichnet, dass** die Ansteuer- und Auswerteeinheit (50) dazu eingerichtet ist, zur automatischen Kompensation des Einflusses der elektronischen Einstellung des Einschallwinkels β auf den zu ermittelnden ERG-Wert des Fehlers (102) automatisiert vom Abstrahlwinkel α des Ultraschallsenders (12) auf den resultierenden Einschallwinkel β umzurechnen.

18. Vorrichtung (1) gemäß Anspruch 14, **dadurch gekennzeichnet, dass** die Ansteuer- und Auswerteeinheit (50) dazu eingerichtet ist, zur automatischen Kompensation des Einflusses der elektronischen Einstellung des Einschallwinkels β auf den zu ermittelnden ERG-Wert des Fehlers (102) automatisiert die mit der elektronischen Variation des Einschallwinkels β einhergehende Variation der virtuellen Ultraschallsendergröße D' zu kompensieren.

19. Vorrichtung, (1) gemäß Anspruch 14, **dadurch gekennzeichnet, dass** die Ansteuer- und Auswerteeinheit (50) dazu eingerichtet ist, zur automatischen Kompensation des Einflusses der elektronischen Einstellung des Einschallwinkels β auf den ermittelten ERG-Wert des Fehlers automatisiert die mit der elektronischen Variation des Einschallwinkels β einhergehende Variation der Lage des Fokus des Ultraschallstrahls Im Prüfling zu kompensleren.

20. Vorrichtung (1) gemäß Anspruch 14, **dadurch gekennzeichnet, dass** die Ansteuer- und Auswerteeinheit (50) dazu eingerichtet ist, zur automatischen Kompensation des Einflusses der elektronischen Einstellung des Einschallwinkels β auf den ermittelten ERG-Wert des Fehlers automatisiert die mit der elektronischen Variation des Einschallwinkels β einhergehende Variation der Lage des Einkoppelpunkts X in den Prüfling zu kompensieren.

21. Vorrichtung (1) gemäß Anspruch 14, **dadurch gekennzeichnet, dass**
e. der Prüfkopf ein Mittel zur Positionserfassung aufweist, und
f. die Ansteuer- und Auswerteeinheit (50) dazu eingerichtet ist, einen B-Scan, einen C-Scan oder einen S-Scan des Prüflings (102) auf einer der Vorrichtung (1) zugeordneten Anzeigeeinrichtung (52) darzustellen.

22. Vorrichtung (1) gemäß Anspruch 21, **dadurch gekennzeichnet, dass** im dargestellten Scan ein Fehler (102) durch einen Balken symbolisiert wird, dessen Ausdehnung entlang seiner Längsachse mit dem ERG-Wert des Fehlers (102) korreliert.

23. Vorrichtung (1) gemäß Anspruch 21, **dadurch gekennzeichnet, dass** im dargestellten Scan zumindest eines der folgenden weiteren Charakteristika eines Fehlers (102) dargestellt wird:
g. relative Amplitude des Fehlerechos,
h. Einschallwinkel β, unter dem der ERG-Wert des Fehlers (102) maximal ist,
i. Relative Fehlergröße,
j. Bein, aus welchem das Fehlerecho herrührt, und
k. Information darüber, ob der ERG-Wert des Fehlers (102) über verschiedene Einschallwinkel β im Wesentlichen konstant ist.

24. Vorrichtung (1) gemäß Anspruch 23, **dadurch gekennzeichnet, dass** zumindest einer der folgenden Anzeigeparameter zur Codierung der dazustellenden weiteren Fehlercharakteristika verwendet wird:
1. Farbe,
m. Abmessung des Balkens quer zu seiner Längsachse,
n. Winkel des Längsachse des Balkens gegen die Oberfläche des Prüflings,
o. Geometrische Grundform des Balkens.

## Claims

1. A method for the non-destructive inspection of a test object (100) by means of ultrasound, comprising the following process steps:
a. insonifying directed ultrasonic pulses into the test object (100) at an insonification angle β, wherein the insonification angle β is set electronically,
b. recording echo signals that result from the ultrasonic pulses insonified into the test object (100),
c. determining an ERS value (ERS = "equivalent reflector size") of a flaw (102) in the test object volume from echo signals that can be ascribed to the flaw (102) by comparison with a plurality of stored reference values and by calculated compensation of the influence due to the changes of the insonification angle β on the ERS value of the flaw (102) to be determined, the compensation taking into account at least one of the following quantity changes: change of the virtual ultrasonic transducer size, change of the position of the coupling point, change of the sound path or change of the focus.

2. The method according to claim 1, **characterised in that**
a. for the insonification of directed ultrasonic pulses, a transmitting test probe (10) is used whose ultrasonic transmitter (12) comprises a plurality of independently controllable ultrasonic transducers (14), and
b. for the electronic setting of the insonification angle β, the plurality of ultrasonic transducers (14) is controlled individually and phase-accurately in such a way that the emission angle α of the ultrasonic transmitter (12) is varied.

3. The method according to claim 1, **characterised in that** the stored reference values are the following:
a. a DGS ("distance, gain, size") diagram for the insonification angle β, and/or
b. echoes from one or more reference flaws measured at the insonification angle β.

4. The method according to claim 1, **characterised in that** the method steps a) to c) are executed for at least two different insonification angles β1, β2 which are set electronically.

5. The method according to claim 1, **characterised in that** the plurality of stored reference values is correlated with the at least two different insonification angles β1, β2.

6. The method according to claim 1, **characterised in that**, for the automatic compensation of the influence of the electronic setting of the insonification angle β on the determined ERS value of the flaw, an automatic conversion of the emission angle α of the ultrasonic transmitter (12) into the resulting insonification angle β is carried out.

7. The method according to claim 1, **characterised in that**, for the automatic compensation of the influence of the electronic setting of the insonification angle β on the determined ERS value of the flaw, the variation of the virtual ultrasonic transmitter size D' accompanying the electronic variation of the insonification angle β is automatically compensated.

8. The method according to claim 1, **characterised in that**, for the automatic compensation of the influence of the electronic setting of the insonification angle β on the determined ERS value of the flaw, the variation of the position of the focus of the ultrasonic beam in the test object accompanying the electronic variation of the insonification angle β is automatically compensated.

9. The method according to claim 1, **characterised in that**, for the automatic compensation of the influence of the electronic setting of the insonification angle β on the determined ERS value (ERS = "equivalent reflector size") of the flaw, the variation of the position of the coupling point X into the test object accompanying the electronic variation of the insonification angle β is automatically compensated.

10. The method according to claim 1, **characterised in that** in a further method step, a B scan, a C scan or an S scan of the test object (100) is displayed.

11. The method according to claim 10, **characterised in that** a flaw (102) is symbolised by a bar in the displayed scan, the extension of which along its longitudinal axis correlates with the ERS value of the flaw (102).

12. The method according to claim 10, **characterised in that** at least one of the following further characteristics of a flaw (102) is depicted in the displayed scan:
a. relative amplitude of the flaw echo,
b. insonification angle β at which the ERS value of the flaw (102) is at maximum,
c. relative flaw size,
d. sound path from which the flaw echo originates, and
e. information on whether the ERS value of the flaw (102) is substantially constant over different insonification angles β.

13. The method according to claim 12, **characterised in that** at least one of the following display parameters is used for coding the further flaw characteristics to be shown:
a. colour,
b. dimension of the bar transverse to its longitudinal axis,
c. angle of the longitudinal axis of the bar relative to the surface of the test object (100),
d. geometric basic form of the bar.

14. A device (1) for the non-destructive testing of a test object (100) by means of ultrasound, comprising
a. a transmitting test probe (10) with an ultrasonic transmitter (12), which is configured to insonify directed ultrasonic pulses at an insonification angle β into the test object (100),
b. an ultrasonic receiver (40), which is configured to record echo signals of the ultrasonic pulses insonified into the test object (100),
c. a control and evaluation unit (50), which is configured
i. to control the ultrasonic transmitter (12) of the transmitting test probe (10) in such a way that the ultrasonic transmitter (12) is excited to emit ultrasonic pulses,
ii. to process the echo signals recorded by the ultrasonic receiver (40), and
iii. to determine an ERS value (ERS = "equivalent reflector size") of the flaw (102) from echo signals that can be assigned to a flaw (102) in the volume of the test object (100),
**characterised in that**
d. the ultrasonic transmitter (12) has a plurality of ultrasonic transducers (14) that can be controlled independently, and
e. the control and evaluation unit (50) is configured:
i. to control the plurality of ultrasonic transducers (14) individually and phase-accurately such that the emission angle α of the ultrasonic transmitter (12) and thus, the insonification angle β into the test object (100), can be adjusted electronically, and
ii. to determine the ERS value of a flaw (102) automatically by comparison with a plurality of stored reference values.
iii. to automatically compensate by calculation the influence of the electronic adjustment of the insonification angle β on the ERS value of the flaw (102) to be determined, the compensation taking into account at least one of the following quantity changes: change of the virtual ultrasonic transducer size, change of the position of the coupling point, change of the sound path or change of the focus.

15. The device according to claim 14, **characterised in that** the stored reference values are the following:
a. a DGS diagram for the insonification angle β, and/or
b. echoes from one or more reference flaws measured at the insonification angle β.

16. The device (1) according to claim 14, **characterised in that**
c. the control and evaluation unit (50) is configured to electronically set at least two different insonification angles β, and
d. the plurality of stored reference values is correlated with the at least two different insonification angles β.

17. The device (1) according to claim 14, **characterised in that** the control and evaluation unit (50) is configured, for the automatic compensation of the influence of the electronic setting of the insonification angle β on the ERS value of the flaw (102) to be determined, to automatically convert the emission angle α of the ultrasonic transmitter (12) into the resulting insonification angle β.

18. The device (1) according to claim 14, **characterised in that** the control and evaluation unit (50) is configured, for the automatic compensation of the influence of the electronic setting of the insonification angle β on the ERS value of the flaw (102) to be determined, to automatically compensate the variation of the virtual ultrasonic transmitter size D' accompanying the electronic variation of the insonification angle β.

19. The device (1) according to claim 14, **characterised in that** the control and evaluation unit (50) is configured, for the automatic compensation of the influence of the electronic setting of the insonification angle β on the determined ERS value of the flaw, to automatically compensate the variation of the position of the focus of the ultrasonic beam in the test object accompanying the electronic variation of the insonification angle β.

20. The device (1) according to claim 14, **characterised in that** the control and evaluation unit (50) is configured, for the automatic compensation of the influence of the electronic setting of the insonification angle β on the determined ERS value of the flaw, to automatically compensate the variation of the position of the coupling point X into the test object accompanying the electronic variation of the insonification angle β.

21. The device (1) according to claim 14, **characterised in that**
e. the test probe has a means for position detection, and
f. the control and evaluation unit (50) is configured to depict a B scan, a C scan or an S scan of the test object (102) on a display device (52) associated with the device (1).

22. The device (1) according to claim 21, **characterised in that** a flaw (102) is symbolised by a bar in the displayed scan, the extension of which along its longitudinal axis correlates with the ERS value of the flaw (102).

23. The device (1) according to claim 21, **characterised in that** at least one of the following further characteristics of a flaw (102) is depicted in the displayed scan:
g. relative amplitude of the flaw echo,
h. insonification angle β at which the ERS value of the flaw (102) is at maximum,
i. relative flaw size,
j. leg from which the flaw echo originates, and
k. information on whether the ERS value of the flaw (102) is substantially constant over different insonification angles β.

24. Device (1) according to claim 23, **characterised in that** at least one of the following display parameters is used for coding the further flaw characteristics to be shown:
l. colour,
m. dimension of the bar transverse to its longitudinal axis,
n. angle of the longitudinal axis of the bar relative to the surface of the test object,
o. geometric basic form of the bar.

## Revendications

1. Procédé de contrôle non-destructif par ultrasons d'une éprouvette (100), comprenant les étapes de procédé suivantes :
a. émettre des impulsions ultrasonores dirigées, à un angle d'irradiation acoustique β, dans ladite éprouvette (100), ledit angle d'irradiation acoustique β étant réglé de façon électronique,
b. recevoir des signaux d'écho qui résultent des impulsions ultrasonores émises dans ladite éprouvette (100),
c. déterminer une valeur ERG (ERG = « Ersatzreflektorgröße », signifiant « taille de réflecteur équivalent ») d'un défaut (102) dans le volume de l'éprouvette, à partir de signaux d'écho qui peuvent être associés au défaut (102), par une comparaison avec une pluralité de valeurs de référence mémorisées et avec une compensation par calcul de l'influence sur la valeur ERG à déterminer du défaut (102) par les changements de l'angle d'irradiation acoustique β, ladite compensation prenant en compte au moins l'un des changements de grandeur suivants : le changement de la taille virtuelle de transducteur ultrasonore, le changement de la position du point de couplage, le changement de la trajectoire acoustique ou le changement du foyer.

2. Procédé selon la revendication 1, **caractérisé par le fait que**,
a. pour irradier des impulsions ultrasonores dirigées, on utilise un palpeur émetteur (10) dont l'émetteur d'ultrasons (12) comprend une pluralité de transducteurs ultrasonores (14) aptes à être commandés indépendamment, et,
b. pour régler électroniquement l'angle d'irradiation acoustique β, ladite pluralité de transducteurs ultrasonores (14) est commandée de façon individuelle à précision de phase, de manière à ce que l'angle de réflexion α de l'émetteur d'ultrasons (12) soit varié.

3. Procédé selon la revendication 1, **caractérisé par le fait que** les valeurs de référence mémorisées sont les suivantes :
a. un diagramme AVG (AVG = « Amplitude-Verstärkung-Größe », signifiant « amplitude - gain - taille ») relatif à l'angle d'irradiation acoustique β, et/ou
b. des échos d'un ou de plusieurs défaut(s) de référence mesuré(s) à l'angle d'irradiation acoustique β.

4. Procédé selon la revendication 1, **caractérisé par le fait que** les étapes a) à c) du procédé sont réalisées pour au moins deux angles d'irradiation acoustique différents β1, β2 qui sont réglés électroniquement.

5. Procédé selon la revendication 1, **caractérisé par le fait que** la pluralité de valeurs de référence mémorisées est en corrélation avec lesdits au moins deux angles d'irradiation acoustique différents β1, β2.

6. Procédé selon la revendication 1, **caractérisé par le fait que**, pour compenser automatiquement l'influence du réglage électronique de l'angle d'irradiation acoustique β sur la valeur ERG déterminée du défaut, l'angle de réflexion α de l'émetteur d'ultrasons (12) est converti de façon automatisée dans l'angle d'irradiation acoustique β résultant.

7. Procédé selon la revendication 1, **caractérisé par le fait que**, pour compenser automatiquement l'influence du réglage électronique de l'angle d'irradiation acoustique β sur la valeur ERG déterminée du défaut, la variation de la taille virtuelle d'émetteur d'ultrasons D', qui va de pair avec la variation électronique de l'angle d'irradiation acoustique β,est compensée de façon automatisée.

8. Procédé selon la revendication 1, **caractérisé par le fait que**, pour compenser automatiquement l'influence du réglage électronique de l'angle d'irradiation acoustique β sur la valeur ERG déterminée du défaut, la variation de la position du foyer du faisceau d'ultrasons à l'intérieur de ladite éprouvette, qui va de pair avec la variation électronique de l'angle d'irradiation acoustique β, est compensée de façon automatisée.

9. Procédé selon la revendication 1, **caractérisé par le fait que**, pour compenser automatiquement l'influence du réglage électronique de l'angle d'irradiation acoustique β sur la valeur ERG (ERG = « Ersatzreflektorgröße », signifiant « taille de réflecteur équivalent ») déterminée du défaut, la variation de la position du point de couplage X dans ladite éprouvette, qui va de pair avec la variation électronique de l'angle d'irradiation acoustique β, est compensée de façon automatisée.

10. Procédé selon la revendication 1, **caractérisé par le fait que**, dans une autre étape du procédé, on représente un B-scan, un C-scan ou un S-scan de ladite éprouvette (100).

11. Procédé selon la revendication 10, **caractérisé par le fait que**, dans le scan représenté, un défaut (102) est symbolisé par une barre dont l'extension suivant son axe longitudinal est en corrélation avec la valeur ERG du défaut (102).

12. Procédé selon la revendication 10, **caractérisé par le fait que**, dans le scan représenté, est représentée l'une au moins des autres caractéristiques suivantes d'un défaut (102) :
a. l'amplitude relative de l'écho du défaut,
b. l'angle d'irradiation acoustique β auquel la valeur ERG du défaut (102) est maximale,
c. la taille relative du défaut,
d. la trajectoire acoustique d'où provient l'écho du défaut et
e. l'information de savoir si la valeur ERG du défaut (102) est pour l'essentiel constante sur différents angles d'irradiation acoustique β.

13. Procédé selon la revendication 12, **caractérisé par le fait que**, pour le codage des autres caractéristiques de défaut à représenter, on utilise l'un au moins des paramètres d'affichage suivants :
a. la couleur,
b. la dimension de la barre, transversale à son axe longitudinal,
c. l'angle de l'axe longitudinal de la barre par rapport à la surface de l'éprouvette (100),
d. la forme de base géométrique de la barre.

14. Dispositif (1) de contrôle non-destructif par ultrasons d'une éprouvette (100), comprenant
a. un palpeur émetteur (10) ayant un émetteur d'ultrasons (12) qui est adapté pour émettre des impulsions ultrasonores dirigées, à un angle d'irradiation acoustique β, dans ladite éprouvette (100),
b. un récepteur d'ultrasons (40) qui est adapté pour recevoir des signaux d'écho des impulsions ultrasonores émises dans ladite éprouvette (100),
c. une unité de commande et d'évaluation (50) qui est adaptée pour
i. commander ledit émetteur d'ultrasons (12) du palpeur émetteur (10) de manière à ce que l'émetteur d'ultrasons (12) soit incité à émettre des impulsions ultrasonores,
ii. traiter les signaux d'écho reçus par ledit récepteur d'ultrasons (40), et pour
iii. déterminer, à partir de signaux d'écho qui peuvent être associés à un défaut (102) dans le volume de l'éprouvette (100), une valeur ERG (ERG = « Ersatzreflektorgröße », signifiant « taille de réflecteur équivalent ») dudit défaut (102),
**caractérisé par le fait que**
d. ledit émetteur d'ultrasons (12) comprend une pluralité de transducteurs ultrasonores (14) aptes à être commandés indépendamment, et
e. ladite unité de commande et d'évaluation (50) est adaptée pour :
i. commander la pluralité de transducteurs ultrasonores (14) de façon individuelle à précision de phase, de manière à ce que l'angle de réflexion α de l'émetteur d'ultrasons (12) et ainsi l'angle d'irradiation acoustique β dans ladite éprouvette (100) puisse être réglé de façon électronique, et
ii. déterminer de manière automatisée la valeur ERG d'un défaut (102), par comparaison avec une pluralité de valeurs de référence mémorisées,
iii. compenser automatiquement par calcul l'influence du réglage électronique de l'angle d'irradiation acoustique β sur la valeur ERG à déterminer du défaut (102), ladite compensation prenant en compte au moins l'un des changements de grandeur suivants : le changement de la taille virtuelle de transducteur ultrasonore, le changement de la position du point de couplage, le changement de la trajectoire acoustique ou le changement du foyer.

15. Dispositif selon la revendication 14, **caractérisé par le fait que** les valeurs de référence mémorisées sont les suivantes :
a. un diagramme AVG relatif à l'angle d'irradiation acoustique β et/ou
b. des échos d'un ou de plusieurs défaut(s) de référence mesuré(s) à l'angle d'irradiation acoustique β.

16. Dispositif (1) selon la revendication 14, **caractérisé par le fait que**
c. ladite unité de commande et d'évaluation (50) est adaptée pour régler électroniquement au moins deux angles d'irradiation acoustique β différents, et que
d. ladite pluralité de valeurs de référence mémorisées est en corrélation avec lesdits au moins deux angles d'irradiation acoustique β différents.

17. Dispositif (1) selon la revendication 14, **caractérisé par le fait que**, pour compenser automatiquement l'influence du réglage électronique de l'angle d'irradiation acoustique β sur la valeur ERG à déterminer du défaut (102), ladite unité de commande et d'évaluation (50) est adaptée pour convertir de façon automatisée l'angle de réflexion α de l'émetteur d'ultrasons (12) dans l'angle d'irradiation acoustique β résultant.

18. Dispositif (1) selon la revendication 14, **caractérisé par le fait que**, pour compenser automatiquement l'influence du réglage électronique de l'angle d'irradiation acoustique β sur la valeur ERG à déterminer du défaut (102), ladite unité de commande et d'évaluation (50) est adaptée pour compenser de façon automatisée la variation de la taille virtuelle d'émetteur d'ultrasons D', qui va de pair avec la variation électronique de l'angle d'irradiation acoustique β.

19. Dispositif (1) selon la revendication 14, **caractérisé par le fait que**, pour compenser automatiquement l'influence du réglage électronique de l'angle d'irradiation acoustique β sur la valeur ERG déterminée du défaut, ladite unité de commande et d'évaluation (50) est adaptée pour compenser de façon automatisée la variation de la position du foyer du faisceau d'ultrasons à l'intérieur de ladite éprouvette, qui va de pair avec la variation électronique de l'angle d'irradiation acoustique β.

20. Dispositif (1) selon la revendication 14, **caractérisé par le fait que**, pour compenser automatiquement l'influence du réglage électronique de l'angle d'irradiation acoustique β sur la valeur ERG déterminée du défaut, ladite unité de commande et d'évaluation (50) est adaptée pour compenser de façon automatisée la variation de la position du point de couplage X dans ladite éprouvette, qui va de pair avec la variation électronique de l'angle d'irradiation acoustique β.

21. Dispositif (1) selon la revendication 14, **caractérisé par le fait que**
e. ledit palpeur comprend un moyen de détection de position et
f. ladite unité de commande et d'évaluation (50) est adaptée pour représenter un B-scan, un C-scan ou un S-scan de ladite éprouvette (100) sur un dispositif d'affichage (52) associé au dispositif (1).

22. Dispositif (1) selon la revendication 21, **caractérisé par le fait que**, dans le scan représenté, un défaut (102) est symbolisé par une barre dont l'extension suivant son axe longitudinal est en corrélation avec la valeur ERG du défaut (102).

23. Dispositif (1) selon la revendication 21, **caractérisé par le fait que**, dans le scan représenté, est représentée l'une au moins des autres caractéristiques suivantes d'un défaut (102) :
g. l'amplitude relative de l'écho du défaut,
h. l'angle d'irradiation acoustique β auquel la valeur ERG du défaut (102) est maximale,
i. la taille relative du défaut,
j. la branche d'où provient l'écho du défaut et
k. l'information de savoir si la valeur ERG du défaut (102) est pour l'essentiel constante sur différents angles d'irradiation acoustique β.

24. Dispositif (1) selon la revendication 23, **caractérisé par le fait que**, pour le codage des autres caractéristiques de défaut à représenter, on utilise l'un au moins des paramètres d'affichage suivants :
l. la couleur,
m. la dimension de la barre, transversale à son axe longitudinal,
n. l'angle de l'axe longitudinal de la barre par rapport à la surface de l'éprouvette (100),
o. la forme de base géométrique de la barre.
